# FASCICULE DE BREVET EUROPEEN

(11) **EP 4 007 117 B1**
(45) Date de publication et mention de la délivrance du brevet: **21.06.2023**
(21) Numéro de dépôt: 21210141.4
(22) Date de dépôt: 24.11.2021
(51) Int. Cl.: H02J 7/00, E06B 9/68, H02J 9/00, E05C 9/06, E05D 15/52, E05B 17/22, E05B 47/00

(54) **PROCÉDÉ DE GESTION D'ÉNERGIE, POUR UN DÉTECTEUR DE POSITION D'UNE PIÈCE DE FERRURE MOBILE D'HUISSERIE**
ENERGIESTEUERUNGSVERFAHREN FÜR EINEN POSITIONSDETEKTOR EINES BEWEGLICHEN BESCHLAGTEILS EINER TÜRZARGE
POWER MANAGEMENT METHOD, FOR A DETECTOR OF THE POSITION OF A MOBILE FITTING PART FOR A FRAME

(30) Priorité: 25.11.2020 FR 2012139
(43) Date de publication de la demande: 01.06.2022
(73) Titulaire: Somfy Activites SA, 74300 Cluses (FR)
(72) Inventeur: REVET, Pierre, 74300 CLUSES (FR); SERVE, David, 74300 CLUSES (FR); SAUNIER, Rémi, 74300 CLUSES (FR)
(74) Mandataire: Lavoix

(56) Documents cités:
- EP-A1- 2 924 202
- WO-A1-2020/187967
- DE-U1-202014 006 760

## Description

La présente invention concerne un procédé de gestion d'énergie, pour un détecteur de position d'une pièce de ferrure mobile portée par un chant appartenant à un ouvrant ou à un dormant d'une huisserie, telle qu'une porte, une fenêtre ou un volet. La présente invention concerne également le détecteur de position en tant que tel.

Pour évoluer entre une configuration battante, oscillante ou verrouillée, une fenêtre oscillo-battante comprend habituellement une ferrure, avec un pion mobile faisant saillie du chant, ce pion se déplaçant le long du chant sous l'action de la poignée de la fenêtre. De façon similaire, pour évoluer entre une configuration déverrouillée et une configuration verrouillée, une fenêtre coulissante comprend habituellement une ferrure à crochet basculant, commandée par la poignée de la fenêtre. De systèmes similaires se retrouvent sur les portes et les volets, où la ferrure inclut par exemple un pêne ou un crochet, selon la situation.

WO2018104024A1 décrit un dispositif pour sécuriser l'ouvrant d'une fenêtre contre une ouverture non autorisée. Le dispositif est disposé dans l'interstice entre l'ouvrant et le dormant, et comprend trois interrupteurs à lame souple disposés le long de la course d'un pion de verrouillage appartenant à la ferrure de la fenêtre afin de détecter sa position. Pour cela, le pion de verrouillage porte un aimant permanent auquel réagissent les interrupteurs à lame souple. Le dispositif embarque un émetteur radio pour transmettre par radio un signal de statut de la fenêtre, sur la base de l'état des capteurs. Le dispositif embarque aussi des batteries pour alimenter les capteurs et l'émetteur radio.

Pour des questions de fiabilité, il est souhaitable que ce type de détecteur présente une autonomie en énergie relativement longue, par exemple de plusieurs années. Toutefois, au vu du faible espace disponible pour loger le détecteur, la taille de tous les composants embarqués doit être particulièrement faible, notamment les batteries.

Les documents EP 2 924 202 A1, WO 2020/187967 A1 et DE 20 2014 006760 U1 divulguent des dispositifs de fermeture/ouverture d'une huisserie comportant des détecteurs de position du mécanisme de fermeture/ouverture.

L'invention vise donc à fournir un nouveau procédé de gestion d'énergie pour un détecteur de position d'une pièce de ferrure mobile, visant à améliorer son autonomie en énergie sans préjudice à la fiabilité de la détection.

L'invention a pour objet un procédé de gestion d'énergie, pour un détecteur de position d'une pièce de ferrure mobile portée par un chant appartenant à un ouvrant ou à un dormant d'une huisserie, telle qu'une porte, une fenêtre ou un volet, la pièce de ferrure étant mobile suivant une course comprenant plusieurs plages distinctes de positions de la pièce de ferrure par rapport au chant. Le détecteur comprend une batterie et des systèmes capteurs, qui sont alimentés en énergie par la batterie, chaque système capteur étant respectivement associé à l'une des plages et étant configuré pour adopter un mode opérant, dans lequel ledit système capteur renvoie au moins : un état affecté, si la pièce de ferrure est positionnée dans la plage associée audit système capteur, et un état non affecté, si la pièce de ferrure est positionnée hors de la plage associée audit système capteur. Le détecteur comprend en outre un analyseur électronique, qui est configuré pour déterminer une information de position de la pièce de ferrure le long de la course, sur la base de l'état respectif renvoyé par les systèmes capteurs ; et un transmetteur électronique, pour transmettre l'information de position déterminée par l'analyseur électronique. Selon l'invention, le procédé comprend : une mémorisation de quel système capteur est en dernier à l'état affecté alors que le détecteur est dans un mode d'éveil ; alors que le détecteur est en mode d'éveil, un basculement automatique du détecteur dans un mode d'économie d'énergie incluant : un maintien en mode opérant du système capteur qui a été mémorisé, et un basculement dans un mode de veille de tout autre système capteur qui était en mode opérant ; et un basculement automatique du détecteur en mode d'éveil, lorsque le système capteur qui a été mémorisé change d'état alors que le détecteur est en mode d'économie d'énergie, le basculement automatique en mode d'éveil incluant un basculement en mode opérant d'au moins l'un des systèmes capteurs qui était en mode de veille.

Une idée à la base de l'invention est de réduire la consommation d'énergie du détecteur pendant des périodes de temps où la pièce de ferrure n'est pas déplacée, en faisant basculer le détecteur dans un mode d'économie d'énergie où des systèmes capteurs sont mis en mode de veille pour consommer moins d'énergie. Dans le mode d'économie d'énergie, on maintient en mode opérant seulement le système capteur mémorisé tout en mettant en mode de veille tout autre système capteur, afin d'avoir une consommation d'énergie minimale. Dans la mesure où le système capteur mémorisé est associé à la plage où la pièce de ferrure a terminé son déplacement, le maintien en mode opérant de ce système capteur permet de surveiller, durant toute la durée du mode d'économie d'énergie, si la pièce de ferrure n'a pas quitté cette plage, c'est-à-dire n'a pas recommencé à se déplacer. Le changement d'état du système capteur maintenu en mode opérant traduit que la pièce de ferrure a quitté la plage où elle avait terminé son déplacement. Dès lors, le détecteur bascule en mode d'éveil en faisant passer au moins un autre système capteur en mode opérant, par exemple le système capteur adjacent ou tous les systèmes capteurs, afin que l'analyseur électronique puisse déterminer l'information de position, traduisant la plage jusqu'à laquelle la pièce de ferrure s'est déplacée. Ainsi, la détection de la position de la pièce de ferrure reste fiable, et l'énergie provenant de la batterie n'est consommée que lorsque cela est nécessaire, pendant le mode d'éveil où la pièce de ferrure est déplacée. Pour l'essentiel de l'utilisation de l'huisserie où la pièce de ferrure n'est pas déplacée, le détecteur fonctionne en mode d'économie d'énergie, de sorte que la durée de vie de la batterie est maximale.

De préférence, le basculement automatique du détecteur en mode d'économie d'énergie est effectué seulement lorsqu'un délai de mise en veille prédéterminé a été décompté durant le mode d'éveil, sans que l'un des systèmes capteurs en mode opérant n'ait changé d'état durant le délai de mise en veille, le délai de mise en veille étant débuté à partir du moment où le système capteur mémorisé est en dernier à l'état affecté.

De préférence, pour le basculement automatique en mode d'éveil, tous les systèmes capteurs qui étaient en mode de veille sont basculés en mode opérant.

De préférence, au moins l'un des systèmes capteurs est un système capteur simple et est constitué par un unique capteur. De préférence, le mode de veille du système capteur simple correspond à une absence d'alimentation de son unique capteur en énergie. De préférence, le mode opérant du système capteur simple correspond à une alimentation de son unique capteur en énergie.

De préférence, au moins l'un des systèmes capteurs est un système capteur multiple et est constitué par plusieurs capteurs. De préférence, le mode de veille du système capteur multiple correspond à une absence d'alimentation de tous les capteurs du système capteur multiple. De préférence, le mode opérant du système capteur multiple correspond à une alimentation d'au moins l'un des capteurs du système capteur multiple.

De préférence, si le système capteur multiple a été mémorisé comme étant en dernier à l'état affecté alors que le détecteur a basculé dans le mode d'économie d'énergie, le système capteur multiple est maintenu en mode opérant en ce que seulement l'un des capteurs du système capteur multiple reste alimenté.

De préférence, la plage associée au système capteur multiple est une plage d'extrémité, qui s'étend à une extrémité de la course en translation. De préférence, l'un des capteurs du système capteur multiple est un capteur de fin de course. De préférence, l'un des capteurs du système capteur multiple est un capteur intermédiaire. De préférence, si le système capteur multiple a été mémorisé comme étant en dernier à l'état affecté alors que le détecteur a basculé dans le mode d'économie d'énergie, le système capteur multiple est maintenu en mode opérant en ce que le capteur de fin de course cesse d'être alimenté et en ce que le capteur intermédiaire reste alimenté.

De préférence, le procédé comprend une détermination de l'information de position par l'analyseur électronique sur la base de l'état respectif renvoyé par les systèmes capteurs ; et une transmission de l'information de position par le transmetteur électronique, la transmission étant effectuée seulement lorsqu'un délai de stabilisation prédéterminé a été décompté sans que l'un des systèmes capteurs en mode opérant n'ait changé d'état, le délai de stabilisation débutant à partir du moment où le système capteur mémorisé est en dernier à l'état affecté.

De préférence, le détecteur comprend un accéléromètre, distinct des systèmes capteurs, qui est alimenté en énergie par la batterie et qui évolue entre un mode de veille et un mode opérant. De préférence, le procédé comprend un basculement dans un mode de veille de l'accéléromètre lorsqu'un système capteur prédéterminé, parmi les systèmes capteurs, est à l'état affecté.

De préférence, le basculement automatique du détecteur dans le mode d'économie d'énergie est effectué seulement si le système capteur qui est en dernier à l'état affecté est encore à l'état affecté.

De préférence, le détecteur comprend : un boîtier, par l'intermédiaire duquel le détecteur est fixé sur le chant, le boîtier renfermant la batterie, les systèmes capteurs, l'analyseur électronique et le transmetteur électronique ; et une tige, qui est mobile en translation par rapport au boîtier. De préférence, la tige comprend : une extrémité palpeuse, disposée à l'extérieur du boîtier et par l'intermédiaire de laquelle la tige est actionnée en translation par la pièce de ferrure, pour que la position de la tige reflète la position de la pièce de ferrure suivant la course ; et un témoin, disposé à l'intérieur du boîtier. De préférence, chaque système capteur en mode opérant renvoit l'état affecté lorsque le témoin est à proximité dudit système capteur et l'état non affecté lorsque le témoin est éloigné dudit système capteur.

L'invention a également pour objet un détecteur de position d'une pièce de ferrure mobile portée par un chant appartenant à un ouvrant ou à un dormant d'une huisserie, telle qu'une porte, une fenêtre ou un volet, la pièce de ferrure étant mobile suivant une course comprenant plusieurs plages distinctes de positions de la pièce de ferrure par rapport au chant, le détecteur comprenant une batterie et des systèmes capteurs, qui sont alimentés en énergie par la batterie, chaque système capteur étant respectivement associé à l'une des plages et étant configuré pour adopter un mode opérant, dans lequel ledit système capteur renvoie au moins un état affecté, si la pièce de ferrure est positionnée dans la plage associée audit système capteur, et non affecté, si la pièce de ferrure est positionnée hors de la plage associée audit système capteur. Le détecteur comprend en outre un analyseur électronique, qui est configuré pour déterminer une information de position de la pièce de ferrure le long de la course, sur la base de l'état respectif renvoyé par les systèmes capteurs; et un transmetteur électronique, pour transmettre l'information de position déterminée par l'analyseur électronique. Selon l'invention, le détecteur comprend un gestionnaire d'alimentation électronique et une mémoire électronique ; la mémoire électronique est configurée pour mémoriser quel système capteur est en dernier à l'état affecté alors que le détecteur est dans un mode d'éveil ; alors que le détecteur est dans le mode d'éveil, le gestionnaire d'alimentation électronique est configuré pour basculer automatiquement le détecteur dans un mode d'économie d'énergie, en maintenant en mode opérant le système capteur qui a été mémorisé, et en basculant dans un mode de veille tout autre système capteur qui était en mode opérant ; et le gestionnaire d'alimentation électronique est configuré pour basculer automatiquement le détecteur en mode d'éveil lorsque le système capteur qui a été mémorisé change d'état alors que le détecteur est en mode d'économie d'énergie, en basculant en mode opérant au moins l'un des systèmes capteurs qui était en mode de veille.

De préférence, le détecteur objet de l'invention est configuré pour exécuter le procédé de gestion d'énergie de l'invention.

L'invention sera mieux comprise et d'autres avantages de celle-ci apparaîtront à la lumière de la description suivante d'exemples conformes à son principe, illustrés aux dessins annexés dans lesquels :
[Fig 1] La figure 1 est une vue en perspective d'une huisserie équipée d'un détecteur conforme à l'invention.
[Fig 2] La figure 2 est une vue en perspective du détecteur de la figure 1, représenté seul, dont seulement une partie des moyens électroniques est montrée et dont une paroi supérieure est omise.
[Fig 3] La figure 3 est une vue similaire à la figure 2, dans laquelle tous les moyens électroniques sont montrés.
[Fig 4] La figure 4 est une représentation schématique de différentes étapes d'un procédé de gestion d'énergie pour le détecteur des figures précédentes, selon l'invention.

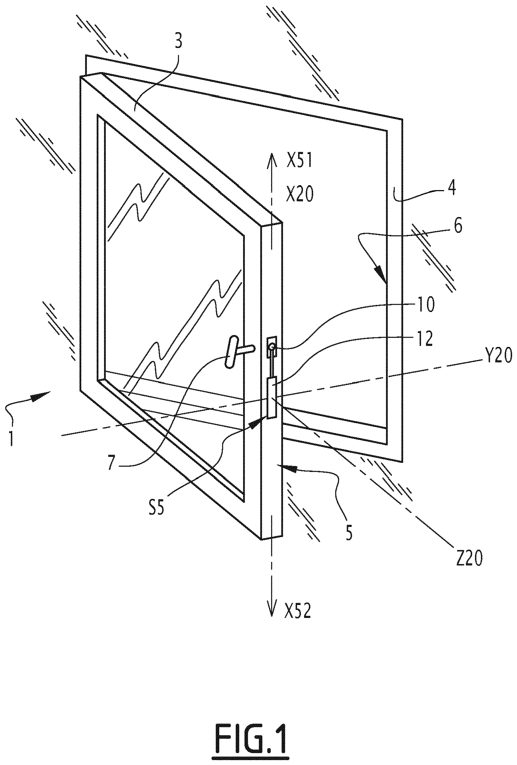

La figure 1 illustre une huisserie 1 battante, qui est un type particulier d'huisserie à ouvrant pivotant, pour sélectivement fermer ou ouvrir une baie d'un mur de bâtiment. L'huisserie 1 est présentement une fenêtre. Alternativement, l'huisserie 1 est une porte ou un volet, ou toute autre huisserie similaire, notamment applicable à un bâtiment.

L'huisserie 1 comprend un ouvrant 3, qui est préférentiellement vitré, et un dormant 4, qui constitue un cadre fixe, délimitant la baie du bâtiment. L'ouvrant 3 est monté pivotant sur le dormant 4 à l'aide de charnières non représentées, ou tout moyen approprié.

L'ouvrant 3 peut être monté battant, c'est-à-dire pivotant autour d'un axe de vertical de battement, ou oscillant, c'est-à-dire pivotant autour d'un axe horizontal d'oscillation. L'ouvrant 3 est configuré pour pouvoir être pivoté selon les deux modes d'ouverture, de façon à être oscillo-battant. Le mouvement de l'ouvrant 3 peut être manuel ou motorisé.

L'ouvrant 3 comprend un chant 5, qui est une surface périphérique externe de l'ouvrant 3, délimitant son pourtour. De même, le dormant comprend un chant 6, qui est une surface périphérique interne du dormant 4, délimitant son contour intérieur. Lorsque l'ouvrant 3 est dans une position fermée, le chant 5 de l'ouvrant 3 se trouve en regard du chant 6 du dormant 4. Un interstice mince est ménagé ou peut être aménagé, au moins sur certaines zones, entre les chants 5 et 6.

Pour pouvoir être verrouillé en position fermée, l'ouvrant 3 est équipé d'une pièce de ferrure mobile 10, ici sous la forme d'un pion. La pièce de ferrure 10 est portée et entraînée par un mécanisme interne de l'ouvrant 3. Cette pièce 10 est mobile par rapport à la surface S5 du chant 5. Cette surface S5 s'étend de préférence parallèlement à l'axe vertical de battement de l'ouvrant 3 et/ou perpendiculairement à l'axe horizontal d'oscillation de l'ouvrant 3.

La pièce de ferrure 10 appartient à une ferrure (non représentée) de l'huisserie, qui s'étend, pour sa dimension la plus longue, selon un axe longitudinal X20, attaché à l'ouvrant 3, et, pour sa dimension la plus étroite, selon un axe transversal Y20, perpendiculaire à l'axe longitudinal X20. La ferrure est avantageusement parallèle à l'axe vertical de battement et/ou perpendiculaire à l'axe horizontal d'oscillation. La ferrure s'étend le long du chant 5.

L'axe X20 est préférentiellement vertical lorsque l'ouvrant 3 est fermé. L'axe transversal Y20 est avantageusement horizontal lorsque l'ouvrant 3 est fermé. On définit un axe d'épaisseur Z20, perpendiculaire aux axes X20 et Y20, et qui traverse les deux surfaces des chants 5 et 6 en regard lorsque l'ouvrant 3 est fermé.

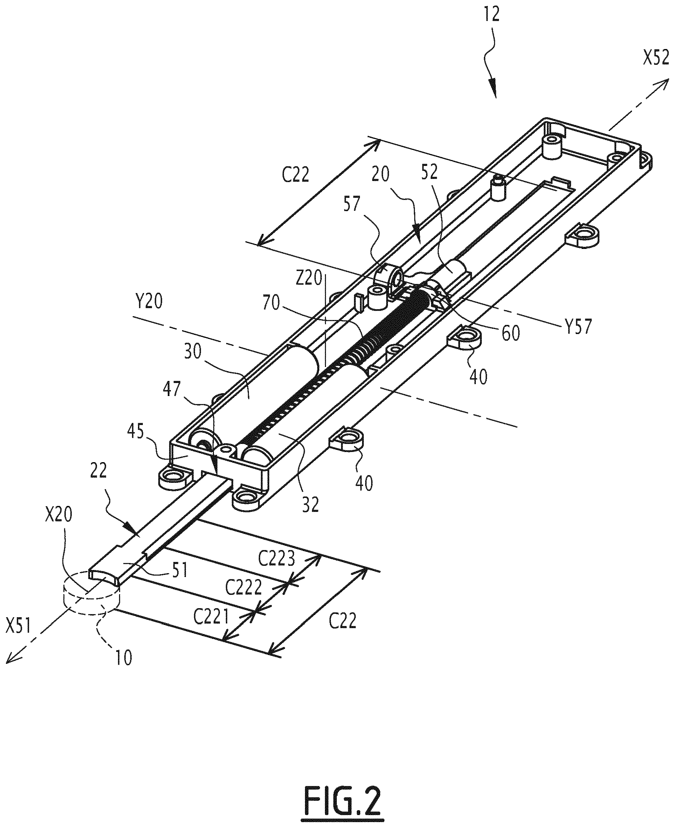

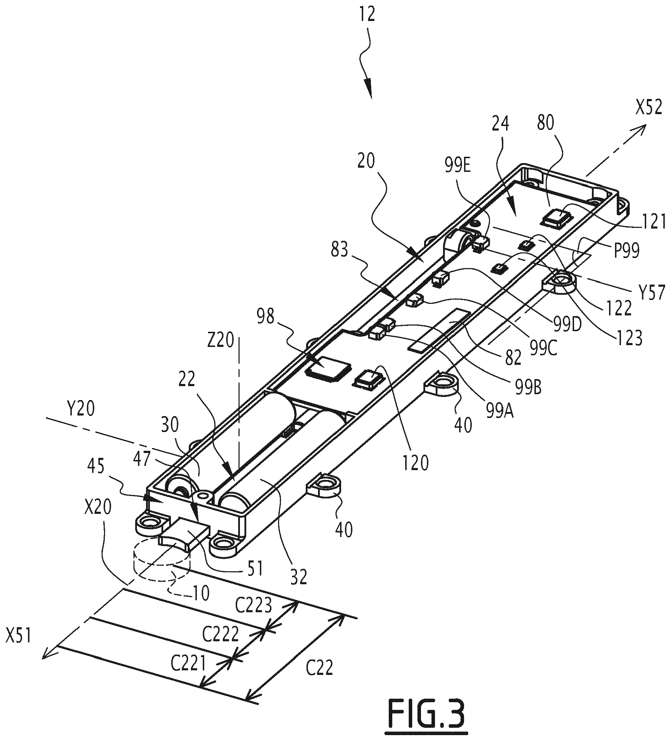

La pièce de ferrure 10 est mobile en translation le long du chant 5 suivant une course C22, représentée schématiquement sur les figures 2 et 3. Ici la course C22 est une course en translation selon l'axe longitudinal X20. Ici, la course C22 inclut une première position fonctionnelle et une deuxième position fonctionnelle de la pièce de ferrure 10, dont l'une est représentée sur la figure 2, et l'autre sur la figure 3. Sur les figures 2 et 3, la pièce de ferrure 10, formant ici un pion, est montrée en traits discontinus. Lorsque l'ouvrant 3 est fermé et que la pièce 10 est dans la première position fonctionnelle, la pièce 10 coopère avantageusement, tel un pêne, avec une gâche ou une butée équipant le chant 6 du dormant 4 pour maintenir l'ouvrant 3 en position fermée. Plus généralement, la première position fonctionnelle est avantageusement une position de verrouillage de l'huisserie 1. De préférence, dans la deuxième position fonctionnelle, la pièce 10 libère l'ouvrant 3, de sorte que l'ouvrant 3 peut être mû en position ouverte en pivotement de battement. Cette deuxième position fonctionnelle est donc une position d'ouverture battante. De préférence, la course C22 peut inclure une troisième position fonctionnelle, dans laquelle la pièce de ferrure 10 libère l'ouvrant 3 de la position fermée de façon que l'ouvrant 3 peut être mû en position ouverte en pivotement d'oscillation. Cette troisième position fonctionnelle est donc une position d'ouverture en oscillation. De préférence, lorsque la pièce 10 peut adopter trois positions fonctionnelles différentes le long de la course C22, la position de verrouillage est une position extrémale de la course C22.

L'ouvrant 3 est avantageusement équipé d'une poignée 7 pour actionner le déplacement de la ferrure incluant la pièce 10, par l'intermédiaire du mécanisme interne de l'ouvrant 3. Alternativement ou en complément, la pièce de ferrure 10 peut être déplacée par l'intermédiaire d'un actionneur électromécanique, non représenté.

En variante, selon la situation et le type d'huisserie, on prévoit un autre type de pièce 10 de la ferrure mobile, par exemple un pêne ou un crochet et/ou on prévoit que la pièce de ferrure mobile est portée par le chant du dormant.

L'huisserie 1 est équipée d'un détecteur 12, montré sur les figures 1 à 3, pour détecter la position de la pièce 10 le long de la course C22.

En variante, au lieu de détecter le pion, le détecteur 12 peut détecter toute autre pièce de ferrure mise en mouvement par la poignée ou par un actionneur électromécanique, le but étant de connaître la position fonctionnelle de la ferrure pour déterminer si l'huisserie est verrouillée ou non. En particulier, le détecteur 12 peut être un détecteur associé à une huisserie coulissante, notamment une fenêtre coulissante, plutôt qu'une huisserie battante ou oscillo-battante. Dans ce cas, le détecteur peut détecter une extrémité libre de ferrure, représentative de la position prise par la poignée, l'actionneur de la fenêtre coulissante ou représentative de la position de le fenêtre coulissante elle-même. Par huisserie coulissante, on entend une huisserie où l'ouvrant coulisse par rapport au dormant pour évoluer entre la position ouverte et la position fermée, plutôt que de pivoter.

Le détecteur 12 comprend des moyens électroniques 24 et, de préférence, une tige 22 et un boîtier 20. Les moyens électroniques 24 ne sont montrés que sur la figure 3.

Ici, le détecteur est fixé au chant 5 par l'intermédiaire du boîtier 20. Le boîtier 20 peut être porté en applique sur le chant 5 ou intégré au moins partiellement au chant 5, par exemple dans une encoche prévue débouchant à la surface du chant 5. On prévoit par exemple que la fixation est effectuée par l'intermédiaire d'oreilles de vissage 40 dont le boîtier 20 est pourvu, ou tout moyen similaire. Les dimensions du boîtier 20 sont définies de sorte à pouvoir le loger dans l'interstice ménagé entre les chants 5 et 6, lorsque l'huisserie 1 est en position fermée.

Dans le présent exemple, le boîtier 20 est de forme générale parallélépipédique, en étant de forme allongée selon l'axe longitudinal X20. Le boîtier 20 enferme les moyens électroniques 24 et une partie de la tige 22. Sur les figures 2 et 3, pour montrer la tige 22, on a omis une paroi supérieure du boîtier 20, qui vient normalement fermer le boîtier 20.

Le boîtier 20 comprend avantageusement une paroi de sortie 45, orientée parallèlement aux axes Y20 et Z20, et pourvue d'une ouverture ou encoche 47 traversée par la tige 22.

La tige 22 comprend une extrémité palpeuse 51, qui s'étend à l'extérieur du boîtier 20 et une extrémité interne 52, qui s'étend à l'intérieur du boîtier 20. Les extrémités 51 et 52 sont donc de part et d'autre de la paroi 45. Les extrémités 51 et 52 sont chacune centrée sur l'axe X20. Entre les extrémités 51 et 52, la tige 22 est avantageusement rectiligne et centrée sur l'axe X20.

On définit un sens avant X51 et un sens arrière X52, opposés et parallèles à l'axe longitudinal X20. Le sens X51 est orienté de l'extrémité 52 à l'extrémité 51. Le sens X51 est orienté de la paroi de l'extrémité 51 à l'extrémité 52. La pièce de ferrure 10 se trouve dans le sens X51 par rapport au boîtier 20.

La tige 22 est montée dans le boîtier 20 de façon mobile, en étant guidée par le boîtier 20 dans une translation rectiligne le long de l'axe X20, par rapport au boîtier 20. Le guidage en translation est par exemple obtenu par coulissement longitudinal de la tige 22 au travers de l'ouverture 47 et au travers d'un cavalier 60, fixé à l'intérieur du boîtier 20. Pour toute position en translation de la tige, l'extrémité 51 s'étend dans le sens X51 par rapport à l'ouverture 47, alors que l'extrémité 52 s'étend dans le sens X52 par rapport au cavalier 60.

L'extrémité 51 est prévue pour recevoir la pièce 10 en appui contre l'extrémité 51 selon l'axe longitudinal X20, comme montré sur les figures 2 et 3. En variante, la tige 22 est fixée à la pièce 10, de sorte à être en appui sur la pièce 10 dans les deux directions X51 et X52, ce qui inclut que la tige 22 puisse être tirée et poussée par la pièce 10. Plus généralement, l'extrémité palpeuse 51 est avantageusement prévue pour recevoir une action mécanique de la part de la pièce 10, c'est-à-dire un effort transmis par contact de la pièce 10 contre l'extrémité 51, afin de déplacer la tige 22, pour que la position de la tige 22 par rapport au boîtier 20 reflète la position de la pièce 10 par rapport au chant 5. Le boîtier 20 étant fixé au chant 5, la pièce 10, translatant le long de l'axe X20 par rapport au chant 5, entraîne en translation la tige 22 par rapport au boîtier 20 selon l'axe X20 via l'extrémité 51. L'extrémité 51 étant maintenue au contact de la pièce 10, la tige 22 et la pièce 10 sont solidaires en translation par rapport au chant 5 et au boîtier 20. La position de la tige 22 reflète ainsi la position de la pièce 10 le long de sa course par rapport au chant 5. La translation de la tige 22 par rapport au boîtier s'effectue le long de la course en translation C22, en même temps que le déplacement de la pièce 10.

Le déplacement de la tige 22 est avantageusement borné par le boîtier 20, la tige 22 arrivant en butée contre le boîtier 20, respectivement dans la direction X51 et dans la direction X52. Par exemple, dans le sens X51, un premier épaulement de la tige 22 arrive en butée longitudinale contre le cavalier 60, alors que, dans le sens X52, un second épaulement de la tige 22 arrive en butée longitudinale contre la paroi 45.

De préférence, comme montré sur la figure 2, le détecteur 12 comprend en outre un ressort 70, avantageusement un ressort axial disposé coaxialement avec l'axe X20. Le ressort 70 est avantageusement entièrement disposé à l'intérieur du boîtier 20. Le ressort 70 impartit un effort sur la tige 22 par rapport au boîtier 20, tendant à déplacer la tige 22 et son extrémité palpeuse 51 vers l'extérieur du boîtier 20, c'est-à-dire dans la direction X51. Pour cela, le ressort 70 est par exemple un ressort de compression, longitudinalement interposé entre le cavalier 60 et un épaulement axial de la tige 22.

La tige 22 est élastiquement rappelée par le ressort 70 vers une position déployée, montrée sur la figure 2, qui correspond à, ou va au-delà de, la fin de course C22 selon le sens X51. Pour amener la tige 22 vers une position rétractée, telle que montrée sur la figure 3, c'est-à-dire translater la tige 22 vers l'intérieur du boîtier 20 dans le sens X52, il convient de pousser la tige 22 à l'encontre de l'effort imparti par le ressort 70. La position rétractée correspond à, ou va au-delà de, la fin de course en translation C22 de la tige 22 selon le sens X52. Lorsque le détecteur 12 est fixé sur le chant 5 et que la pièce 10 est en appui contre l'extrémité 51 dans le sens X52, l'effort fourni par le ressort 70 maintient la tige 22 en appui contre la pièce 10 dans la direction avant X51. Dans l'exemple illustré, aucune fixation de la tige 22 à la pièce 10 n'est donc nécessaire, l'effort du ressort 70 rendant la pièce 10 et la tige 22 solidaires en translation selon l'axe X20.

Les moyens électroniques 24 sont entièrement reçus à l'intérieur du boîtier 20.

Contenus dans le boîtier 20, les moyens électroniques 24 comprennent un témoin 57, une carte électronique 80, un analyseur électronique 98, un transmetteur électronique 82, des capteurs 99A, 99B, 99C, 99D et 99E, des batteries 30 et 32, un gestionnaire d'alimentation électronique 121, une mémoire électronique 122 et, optionnellement, un compteur électronique 123 et un accéléromètre 120.

Les batteries 30 et 32 embarquées dans le boîtier sont prévues pour alimenter en énergie électrique les moyens électroniques 24. En particulier, les batteries alimentent l'analyseur 98, le transmetteur 82, les capteurs 99A, 99B, 99C, 99D et 99E, le gestionnaire d'alimentation 121 et la mémoire 122, ainsi que le compteur 123 et l'accéléromètre 120, si ces derniers sont prévus. En variante, on prévoit une seule batterie, ou un nombre de batteries différent de deux.

La carte électronique 80, notamment de type circuit imprimé ou « Printed Circuit Board », « PCB » en langue anglaise, est fixée à l'intérieur du boîtier 20, montrée sur la figure 3 et omise sur la figure 2. La carte 80 sert à la fois de support mécanique pour certains composants, notamment pour l'analyseur 98, le transmetteur 82, les capteurs 99A, 99B, 99C, 99D et 99E, le gestionnaire 121 et la mémoire 122, ainsi que le compteur 123 et l'accéléromètre 120, s'il sont prévus, tout en comportant un ou plusieurs circuits électroniques assurant les connexions électriques entre les différents moyens électroniques 24 qui l'équipent et/ou qui y sont connectés. De préférence, la carte électronique 80 est orientée parallèlement aux axes X20 et Y20, en étant en appui, de préférence sur son pourtour, contre les parois du boîtier 20. Pour toute position de la tige 22, l'extrémité 52 de la tige 22 est avantageusement disposée, selon l'axe Z20, entre la carte 80 et une paroi de fond du boîtier 20 qui est parallèle à la carte 80.

Le témoin 57, s'il est prévu, est porté par l'extrémité 52 de la tige 22. Pour toute position de la pièce 10 le long de la course C22, le témoin 57 est entièrement disposé à l'intérieur du boîtier 20. La position du témoin 57 par rapport au boîtier 20 reflète donc la position de la pièce 10 par rapport au chant 5, le long de la course C22. Autrement dit, solidairement avec la tige 22 et la pièce 10, le témoin 57 se déplace selon la course en translation C22. Le témoin 57 a vocation à permettre la détection de la position de la pièce 10 le long de la course C22 par les capteurs 99A, 99B, 99C, 99D et 99E. Le fait de prévoir le témoin 57 et la tige 22 fait en sorte que l'on peut facilement détecter la position de la pièce 10, même si cette pièce 10 n'est pas facile à détecter en soi. Par exemple, cela permet de détecter la pièce de ferrure 10 même la pièce de ferrure 10 ne porte pas d'aimant permanent. De plus, cet arrangement permet de détecter la position de la ferrure dans le prolongement de celle-ci, ce qui facilite le dimensionnement du détecteur 12. En alternative toutefois, la pièce 10 de ferrure porte elle-même le témoin 57, auquel cas la tige 22 n'est pas nécessaire.

Le témoin 57 est préférentiellement agencé à hauteur, ou dans le même plan, que la carte 80. Lors de la translation de la pièce 10 sur toute la course C22, le témoin 57 circule le long d'un bord longitudinal 83 de la carte 80, parallèle à l'axe X20. Dans le présent exemple, le bord 83 est formé dans une encoche longitudinale de la carte 80, au sein de laquelle le témoin 57 circule.

Chaque capteur 99A, 99B, 99C, 99D et 99E est fixe par rapport au boîtier 20 et donc par rapport au chant 5, en étant avantageusement disposé sur la carte 80, en étant fixe par rapport à la carte 80. Dans le mode de réalisation illustré, on prévoit cinq capteurs, à savoir les capteurs 99A, 99B, 99C, 99D et 99E. Toutefois, un nombre de capteurs 99 différent de cinq peut être prévu, selon l'application, notamment suivant le nombre de positions fonctionnelles de la pièce 10 à détecter.

Chaque capteur 99A, 99B, 99C, 99D et 99E est avantageusement un composant électronique qui est directement soudé sur la carte 80. De préférence, les capteurs 99A, 99B, 99C, 99D et 99E sont placés successivement le long du bord 83 de la carte, comme montré sur la figure 3. Les capteurs 99A, 99B, 99C, 99D et 99E sont avantageusement agencés en étant répartis le long d'un axe parallèle à l'axe X20. En fonction de l'application, on peut prévoir que les capteurs 99 sont régulièrement répartis parallèlement à l'axe X20, ou que les capteurs 99 sont, au contraire, agencés par groupes, comme montré sur la figure 3. Plus généralement, les capteurs 99A, 99B, 99C, 99D et 99E sont géométriquement agencés dans un même plan de capteur, qui est avantageusement parallèle ou coplanaire avec la carte 80. Le plan de capteur est parallèle à l'axe X20. En particulier, on prévoit qu'un centre théorique de chaque capteur soit disposé dans le plan.

Chaque capteur 99A, 99B, 99C, 99D et 99E est un capteur actif, c'est-à-dire un capteur qui nécessite de l'énergie électrique reçue des batteries 30 et 32 pour fonctionner. C'est par exemple le cas pour les capteurs à effet Hall. Chaque capteur 99A, 99B, 99C, 99D et 99E adopte un mode opérant, dans lequel le capteur est alimenté en énergie par les batteries 30 et 32 et dans lequel le capteur fonctionne et sert à détecter la position de la pièce 10 et un mode de veille. Chaque capteur 99A, 99B, 99C, 99D et 99E évolue entre le mode opérant et le mode de veille, dans lequel le capteur n'est pas alimenté en énergie électrique, ou est alimenté de façon réduite. Dans le mode de veille, le capteur ne permet pas détecter la position de la pièce 10.

Chaque capteur est avantageusement sélectionné pour présenter une consommation, en mode opérant, d'environ 2µA (microampères), ou moins. Dans le présent exemple, mettre les cinq capteurs en mode opérant consomme donc environ 10µA, alors qu'un seul capteur consomme 2µA. Laisser un seul capteur en mode opérant consomme donc cinq fois moins d'énergie que de laisser l'ensemble des capteurs en mode opérant.

Les capteurs 99A, 99B, 99C, 99D et 99E sont agencés le long de la course parcourue par le témoin 57, reflétant la course C22 effectuée par la pièce 10. Sur le plan fonctionnel, chaque capteur 99A, 99B, 99C, 99D et 99E est affecté à un groupe de capteurs, ces groupes étant nommés « systèmes capteurs ». Ici, les capteurs 99A et 99B appartiennent à un premier système capteur, le capteur 99C appartient à un deuxième système capteur, alors que les capteurs 99D et 99E appartiennent à un troisième système capteur. Chaque système capteur peut être un système capteur simple, constitué d'un unique capteur, ce qui est le cas du système capteur 99C. Chaque système capteur peut être un système capteur multiple, constitué de plusieurs capteurs successifs le long de la course C22, ce qui est le cas des systèmes capteurs 99A, 99B et 99D, 99E. Les systèmes capteurs sont eux-mêmes successifs le long de la course C22.

Parmi les capteurs 99A, 99B, 99C, 99D et 99E, on distingue des capteurs de fin de course 99A et 99E, qui sont positionnés aux extrémités de la course C22, et des capteurs intermédiaires 99B, 99C et 99D qui sont tous entourés de deux autres capteurs adjacents. De même, les plages C221 et C223, aux extrémités de la course C22, sont des plages d'extrémité, alors que la plage C222, entourée par deux plages adjacentes, ici les plages C221 et C223, est une plage intermédiaire. Le système capteur 99A, 99B, associé à la plage d'extrémité C221, est un système capteur d'extrémité. Le système capteur 99D, 99E, associé à la plage d'extrémité C223, est un système capteur d'extrémité. Le système capteur 99C, associé à la plage intermédiaire C222, est un système capteur intermédiaire.

Il s'en suit que chaque système capteur évolue globalement entre un mode opérant et un mode de veille. En mode opérant, au moins un capteur du système capteur est lui-même en mode opérant. En mode de veille, tous les capteurs du système capteur sont en mode de veille. Pour le cas du système capteur simple 99C, le mode de veille correspond à une absence d'alimentation du capteur 99C en énergie et le mode opérant correspond à une alimentation du capteur 99C en énergie. Pour le cas du système capteur multiple 99A, 99B, le mode de veille correspond à une absence d'alimentation des capteurs 99A et 99B et le mode opérant du système capteur multiple correspond à une alimentation du capteur 99A, du capteur 99B, ou des deux capteurs 99A et 99B. Pour le système capteur multiple 99A, 99B, on distingue le mode opérant économe, dans lequel un seul des capteurs 99A et 99B est en mode opérant alors que l'autre est en mode de veille, et le mode opérant total, dans lequel tous les deux capteurs 99A et 99B sont en mode opérant. Il en va de même pour le système capteur multiple 99D, 99E.

Chaque système capteur est respectivement associé à une plage respective de positions de la pièce 10 le long de la course C22, c'est-à-dire à une portion respective de la course C22 que l'on souhaite observer. En d'autres termes, chaque système capteur est prévu pour détecter si la pièce 10 est dans une plage donnée de la course C22. Ici, le système capteur 99A, 99B est prévu pour détecter que la pièce 10 est dans une plage C221, le système capteur 99C est prévu pour détecter que la pièce 10 est dans une plage C222, et le système capteur 99D, 99E est prévu pour détecter que la pièce 10 est dans une plage C223. Chaque plage de la course C22, ou seulement certaines plages, couvre au moins une position fonctionnelle de la pièce 10. Ici, chaque plage inclut l'une des trois positions fonctionnelles de la pièce 10. Par exemple, la plage C221 inclut la position fonctionnelle de verrouillage, la plage C222 inclut la position d'ouverture en oscillation, alors que la plage C223 inclut la position d'ouverture battante de l'huisserie 1.

Individuellement, chaque capteur 99A, 99B, 99C, 99D et 99E est associé à une partie respective de l'une des plages C221, C222 et C223. Ici, les capteurs 99A et 99B sont associés chacun à une partie de la plage C221, le capteur 99C une partie centrale de la plage C222 et les capteurs 99D et 99E à une partie respective de la plage C223. Le fait de prévoir un système capteur multiple pour une plage permet par exemple d'augmenter la précision de la détection, d'améliorer la fiabilité de la détection ou de détecter un changement de sens de déplacement de la pièce 10 le long de la course C22.

Selon l'huisserie sur laquelle le détecteur 12 est monté, certaines plages associées à des systèmes capteurs correspondent à l'une des positions fonctionnelles et d'autres non. Ici, on prévoit trois systèmes capteurs pour détecter trois plages, de sorte que le détecteur 12 peut être installé sur une huisserie où la pièce de ferrure à détecter prend trois positions fonctionnelles, ou deux positions fonctionnelles. Dans le cas où la pièce de ferrure prend seulement deux positions fonctionnelles, l'un des trois systèmes capteurs n'est pas utilisé. En variante, on peut prévoir que le détecteur comprend seulement deux systèmes capteurs pour détecter ces deux plages incluant respectivement deux positions fonctionnelles.

En fonction de la position de la pièce 10 le long de la course C22, chaque capteur 99A, 99B, 99C, 99D et 99E qui est en mode opérant renvoie un état affecté ou un état non affecté. Chaque capteur renvoie l'état affecté pour l'une des plages ou une partie de l'une des plages de la course C22 qui lui est propre, et l'état non affecté pour tout le reste de la course C22.

De préférence, on prévoit que, pour toute position de la pièce 10 le long de la course C22, au moins l'un des systèmes capteurs est à l'état affecté. En variante, on peut prévoir que, pour certaines parties de la course C22, tous les systèmes capteurs sont à l'état non affecté, ce qui permet de disposer les systèmes capteurs plus éloignés les uns des autres, ce qui est plus adapté lorsque la course C22 est relativement longue par rapport aux portions de course sur lesquelles les systèmes capteurs peuvent être affectés, c'est-à-dire selon le champ d'action des systèmes capteurs.

Pour chaque capteur 99A, 99B, 99C, 99D et 99E, l'état affecté et l'état non affecté se manifestent sous la forme d'une grandeur physique électrique exploitable par l'analyseur 98, par exemple une valeur ou une plage de valeurs de tension ou de résistance, ou plus généralement un signal électrique analogique, ou encore ou un signal numérique, émis par le capteur. L'état du capteur peut être fourni directement sous la forme d'un état binaire, ou sinon sous la forme d'un non binaire, par exemple linéaire, dont la valeur est déterminée par l'analyseur 98 comme étant l'état affecté ou l'état non affecté.

On prévoit préférentiellement que chaque capteur 99A, 99B, 99C, 99D et 99E passe d'un état à l'autre en fonction de sa proximité avec le témoin 57. Pour chaque capteur, lorsque le témoin 57 est à proximité de ce capteur, le capteur concerné renvoie l'état affecté, alors que, lorsque le témoin 57 est éloigné de ce capteur, le capteur concerné renvoie l'état non affecté, le basculement entre les deux états étant effectué à un seuil de distance prédéterminé. Par exemple, on prévoit que les capteurs 99A, 99B, 99C, 99D et 99E sont des détecteurs de champ électromagnétiques qui réagissent au champ électromagnétique émis par le témoin 57, qui se présente avantageusement sous la forme d'un aimant permanent ou d'une pièce ferromagnétique. Plus généralement, le témoin 57 se présente sous une forme qui le rend facilement détectable par les capteurs 99A, 99B, 99C, 99D et 99E, lorsque le témoin 57 passe à proximité ou vient au contact des capteurs, selon le type de capteur envisagé. Par exemple, chaque capteur est un capteur de déplacement, par exemple à effet Hall. Chaque capteur est avantageusement tout ou rien ou linéaire ou non linéaire. Chaque capteur peut être tout autre capteur électromagnétique approprié, comme par exemple un capteur magnéto-résistif. De préférence, chaque capteur est un capteur de proximité, c'est-à-dire un capteur sans contact avec la tige 22 ou avec le témoin 57, afin d'éviter les frottements mécaniques lors du déplacement de la tige 22.

En variante, on pourrait prévoir que la position de la pièce 10 est détectée par des capteurs mettant en oeuvre une autre technologie qu'une détection électromagnétique, par exemple des capteurs optiques. En variante encore, on prévoit que les capteurs détectent directement la position de la pièce 10, ou d'un témoin porté par la pièce 10, ce qui évite de prévoir le témoin 57 et la tige 22.

En fonction de l'état renvoyé par chaque capteur le constituant, chaque système capteur renvoie lui-même un état affecté, lorsque la pièce de ferrure est positionnée dans la plage associée audit système capteur, et un état non affecté, lorsque la pièce de ferrure est positionnée ailleurs le long de la course C22. De préférence, l'état non-affecté du système capteur correspond à un cas où tout capteur de ce système capteur est à l'état non-affecté. Le système capteur est à l'état affecté lorsque son unique capteur, ou qu'au moins un de ses capteurs, est à l'état affecté. Par exemple, le système capteur multiple 99A, 99B renvoie l'état affecté lorsque le capteur 99A renvoie l'état affecté ou le capteur 99B renvoie l'état affecté, ou les deux capteurs 99A et 99B renvoie l'état affecté. Le système capteur 99A, 99B renvoie l'état non affecté lorsque les capteurs 99A et 99B renvoient l'étant non affecté. Il en est de même pour le système capteur multiple 99D, 99E. Le système capteur simple 99C renvoie l'état affecté lorsque son unique capteur 99C renvoie l'état affecté, et l'état non affecté lorsque son unique capteur 99C renvoie l'état non affecté.

Dans le cas où l'on prévoit le témoin 57, chaque système capteur en mode opérant renvoie l'état affecté lorsque le témoin 57 est à proximité du système capteur et l'état non affecté lorsque le témoin 57 est éloigné du système capteur. Cela reflète le fonctionnement du ou des capteurs inclus dans le système capteur concerné.

L'analyseur électronique 98 est un système électronique, comportant par exemple un processeur mettant en oeuvre un code informatique stocké sur une mémoire. L'analyseur 98 se présente sous la forme d'un ou plusieurs composants électroniques montés sur la carte 80 et électroniquement interconnectés. Fonctionnellement, l'analyseur 98 est conçu pour déterminer une information de position de la pièce 10, qui dépend de la position de la pièce 10, sur la base des états renvoyés par les systèmes capteurs. Pour cela, les capteurs 99A, 99B, 99C, 99D et 99E sont électroniquement reliés à l'analyseur 98 via les circuits de la carte 80.

Lorsque l'un des systèmes capteurs renvoie l'état affecté, l'analyseur 98 interprète que la pièce 10 est positionnée dans la plage de la course C22 qui est associée à ce système capteur. Lorsque ce même système capteur renvoie un état non affecté, l'analyseur 98 interprète que la pièce 10 est positionnée hors de la plage associée à ce système capteur. La détection de plage dans laquelle est positionnée la pièce 10 peut éventuellement être complétée par d'autres vérifications.

Certaines plages de position de la pièce 10 comprennent l'une des positions fonctionnelles de la pièce 10, par exemple de verrouillage ou de déverrouillage de l'huisserie 1. L'information de position déterminée par l'analyseur 98 indique donc, ou permet de déduire, la position fonctionnelle courante de la pièce 10. De préférence, à l'installation du détecteur 12 sur une huisserie donnée, l'installateur configure le détecteur 12, par exemple par l'intermédiaire d'une interface à laquelle le détecteur 12 est connecté, pour déterminer quelle plage correspond à quelle position fonctionnelle.

Le transmetteur 82 est un système électronique, comportant par exemple un processeur mettant en oeuvre un code informatique stocké sur une mémoire. Le transmetteur 82 se présente sous la forme d'un ou plusieurs composants électroniques montés sur la carte 80 et électroniquement interconnectés. Le transmetteur 82 constitue avantageusement un système électronique distinct de l'analyseur 98, mais un seul composant électronique pourrait alternativement embarquer le transmetteur 82 et l'analyseur 98.

L'information de position déterminée par l'analyseur 98 est électroniquement transmise au transmetteur 82, par l'intermédiaire du circuit de la carte 80. Le transmetteur 82 comprend par exemple un émetteur sans fil, tel qu'un émetteur radio comprenant une antenne, ou un émetteur à connexion filaire, conçu pour transmettre l'information de position fournie par l'analyseur et/ou toute autre information déduite de l'information de position, par exemple une alarme, à un dispositif tiers distant du détecteur 12. Pour transmettre l'information, on prévoit préférentiellement que le transmetteur 82 émet un message radio, c'est-à-dire une trame, qui contient l'information de position. En variante, le transmetteur 82 peut transmettre l'information de position directement à une personne à proximité du détecteur 12, en se présentant sous la forme d'un afficheur et/ou en émettant un signal sonore.

De préférence, pour les plages C221 et C223 qui sont associées à des systèmes capteurs multiples, l'analyseur 98 est configuré pour effectuer une détection d'un changement de sens de déplacement de la pièce 10, alors que la pièce 10 est positionnée dans ladite plage C221 ou C223. En d'autres termes, si la pièce 10 entre dans l'une des plages en translatant par exemple dans le sens X51, l'analyseur 98 vérifie si la pièce 10, alors qu'elle est toujours dans cette plage, n'est pas translatée en sens inverse, à savoir le sens X52. Tant que la pièce 10 est entrée dans la plage sans changement de sens, l'analyseur 98 considère que la pièce 10 est dans la position fonctionnelle associée à cette plage, par exemple une position de verrouillage de l'huisserie 1. Dès qu'un changement de sens de la pièce 10 est détecté, l'analyseur 98 considère que, même si la pièce 10 est encore dans la même plage, la pièce a quitté la position fonctionnelle qui y est associée, et n'est donc, par exemple, plus dans la position de verrouillage de l'huisserie 1. L'analyseur 98 transmet alors cette information au transmetteur 82. Cela permet au détecteur 12 d'être adapté à la détection des positions fonctionnelles de la pièce 10 pour plusieurs huisseries, dont la course de la pièce 10 peut différer, présenter une hystérésis ou un jeu important. On assure alors que la pièce 10 a bien atteint ou dépassé la position fonctionnelle, et ne s'en est pas écartée, en vérifiant qu'aucun changement de sens de déplacement n'a été opéré. La détection de la position fonctionnelle de la pièce 10 est alors particulièrement fiable.

L'analyseur électronique 98 effectue la détection du changement de sens de la tige 22 sur la base de l'état retourné par les capteurs du système capteur multiple considéré. Par exemple, on considère la plage C221 associée au système capteur 99A, 99B, à l'extrémité de la course C22 dans le sens X52. Du fait de la présence de deux capteurs 99A et 99B, par exemple, la plage C221 comprend successivement, selon le sens X52, une première partie où seul le capteur 99A est à l'état affecté, une deuxième partie où les capteurs 99A et 99B sont tous deux à l'état affecté, et une troisième partie où seul le capteur 99B est à l'état affecté. En d'autres termes, les capteurs 99A et 99B, renvoient successivement des combinaisons différentes d'états individuels, l'ordre d'apparition de ces combinaisons étant prévisible et permettant donc de déterminer le sens de déplacement de la pièce 10 dans la plage C221. Autrement dit, la succession des changements d'états des capteurs 99A et 99B constitue un code qui peut être reconnu par l'analyseur 98. Si la succession de valeurs captée diffère de la prévision, l'analyseur 98 conclut que la tige 22 a changé de sens de translation.

L'accéléromètre 120 se présente par exemple sous la forme d'un ou plusieurs composants électroniques montés sur la carte 80 et électroniquement interconnectés, ou sous la forme d'un composant séparé et connecté à la carte 80. L'accéléromètre inclut par exemple un capteur seul, ou la combinaison d'un capteur et d'un analyseur électronique. L'accéléromètre 120 est un composant distinct des capteurs 99A, 99B, 99C, 99D et 99E.

L'accéléromètre 120 évolue entre un mode opérant et un mode de veille, dans lequel il consomme moins ou pas d'énergie électrique provenant des batteries 30 et 32. En mode opérant, l'accéléromètre 120 évolue entre un mode d'attente, si aucun mouvement n'a lieu et un mode d'acquisition, si un mouvement est détecté par l'accéléromètre 120. Dans le mode d'attente, l'accéléromètre consomme par exemple environ 4µA, tandis que dans le mode d'acquisition, sa consommation est largement supérieure. En mode opérant, l'accéléromètre 120 vise à identifier si le détecteur 12 lui-même est déplacé ou s'il subit un choc ou des vibrations, afin de détecter par exemple si l'ouvrant 3 lui-même est déplacé entre une position ouverte et une position fermée, et/ou si l'ouvrant 3 et/ou le détecteur 12 sont forcés. En mode opérant, l'accéléromètre 120 est adapté à détecter par exemple une orientation de l'ouvrant 3 et/ou des accélérations subies par l'ouvrant 3, comme par exemple des vibrations subies par l'ouvrant 3. L'accéléromètre 120 détermine par exemple si l'ouvrant 3 est en position fermée, ouverte en battement et ouverte en oscillation. L'accéléromètre 120 peut aussi permettre de détecter si l'ouvrant 3 subit une effraction, car il permet de détecter une éventuelle incohérence entre la position de l'ouvrant 3 et la position de la pièce 10, ou de détecter si l'ouvrant 3 est déplacé alors que la pièce 10 est dans une position de verrouillage.

En mode opérant, l'accéléromètre 120 génère par exemple une information de position de l'ouvrant 3, qui indique la position de l'ouvrant 3 ou permet de déterminer la position de l'ouvrant 3. L'accéléromètre 120 fournit cette information au transmetteur 82, afin que celui-ci effectue la transmission de cette information à un dispositif tiers ou à l'utilisateur. En variante, l'accéléromètre 120 fournit cette information à l'analyseur 98, afin que l'analyseur 98 effectue un traitement de l'information avant transmission par le transmetteur 82.

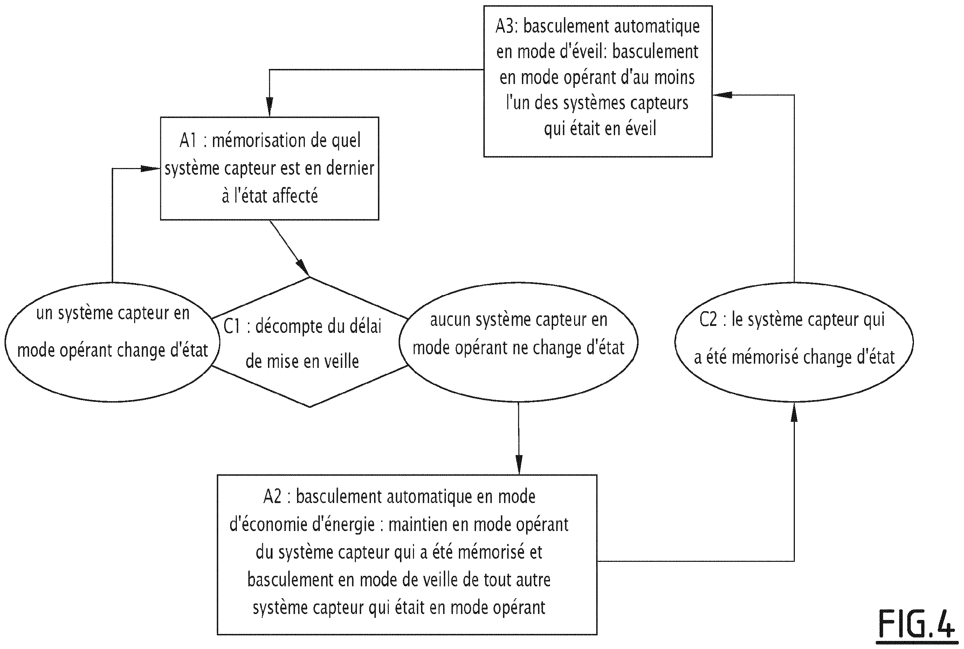

Le gestionnaire d'alimentation 121 est un système électronique, comportant par exemple un processeur mettant en oeuvre un code informatique stocké sur une mémoire. Le gestionnaire d'alimentation 121 se présente sous la forme d'un ou plusieurs composants électroniques montés sur la carte 80 et électroniquement interconnectés. On prévoit avantageusement que l'analyseur 98 et le gestionnaire 121 sont regroupés dans un seul microcontrôleur ou processeur exécutant un programme approprié. Un tel microcontrôleur présente par exemple une consommation d'environ 1,4µA. Fonctionnellement, le gestionnaire d'alimentation 121 fait basculer les moyens électroniques 24 entre le mode opérant et le mode de veille, notamment les capteurs 99A, 99B, 99C, 99D, 99E, et donc les systèmes capteurs, le transmetteur 82 et l'accéléromètre 120. Pour faire basculer ces moyens électroniques 24 en mode opérant ou en mode de veille, on peut par exemple prévoir que le gestionnaire 121 coupe l'alimentation électrique du moyen électronique souhaité. En sélectionnant quel moyen électronique 24 il convient de laisser en mode opérant ou en mode de veille, le gestionnaire d'alimentation 121 pilote un procédé de gestion d'énergie optimisé pour le détecteur 12, montré sur la figure 4.

Pour sélectionner quel moyen doit être en mode opérant ou en mode veille, le gestionnaire 121 se base notamment sur l'état renvoyé par les systèmes capteurs, qui peut être directement transmis par les capteurs au gestionnaire 121, ou par l'analyseur 98 au gestionnaire.

La mémoire électronique 122 et le compteur électronique 123 peuvent constituer une partie du gestionnaire 121, ou être formés par des composants séparés montés sur la carte 80, et interconnectés.

Comme montré sur la figure 4, le détecteur 12 évolue entre deux modes de fonctionnement, à savoir le mode d'éveil et le mode d'économie d'énergie. Le mode d'économie d'énergie correspond à un fonctionnement où peu de moyens électroniques 24 sont en mode opérant pour économiser l'énergie des batteries 30 et 32, alors que le mode d'éveil correspond à un fonctionnement où davantage de moyens électroniques 24 sont en mode opérant pour assurer, notamment, la fiabilité de la détection.

Lors d'une étape A1, effectuée alors que le détecteur 12 est en mode d'éveil, la mémoire 122 mémoire mémorise quel système capteur, parmi le système capteur 99A, 99B, le système capteur 99C et le système capteur 99D, 99E, est en dernier à l'état affecté. Cela revient à mémoriser quel système capteur a détecté en dernier que la pièce 10 s'est positionnée dans la plage qui lui est associée.

Pour effectuer une étape A2 de basculement en mode d'économie d'énergie, le gestionnaire 121 vérifie avantageusement si une condition C1 est remplie, définie comme suit.

Une fois la mémorisation effectuée, le compteur 123 débute le décompte d'un délai de mise en veille prédéterminé, par exemple que quelques secondes, ou de moins d'une seconde. Ce délai de mise en veille est prédéterminé, en ce qu'il est préenregistré dans les moyens électroniques 24, paramétré par l'utilisateur et/ou en ce qu'il est appris par les moyens électroniques 24 durant le fonctionnement du détecteur 12. Par ailleurs, la valeur du délai de mise en veille peut dépendre de quel système capteur a été mémorisé. On peut prévoir une durée de délai de mise en veille plus élevée pour les systèmes capteurs d'extrémité 99A, 99B et 99D, 99E que pour le système capteur intermédiaire 99C.

Dans cette situation, si un système capteur change d'état avant la fin du délai de mise en veille, de préférence un autre système capteur que celui qui a été mémorisé, la condition C1 n'est pas remplie, et le gestionnaire d'alimentation 121 ne fait pas basculer le détecteur 12 en mode d'économie d'énergie. Au lieu de cela, le système capteur qui est à l'état affecté en dernier est mémorisé dans la mémoire 122, et le compteur 123 recommence le décompte d'un délai de mise en veille. Optionnellement, on peut prévoir qu'un système capteur ou qu'un capteur qui avait été mis en mode de veille est mis en mode opérant par le gestionnaire 121, afin de s'assurer de la position de la pièce 10.

De préférence, dans le cas où, avant la fin du délai de mise en veille, le système capteur qui a été mémorisé passe à l'état non-affecté, alors qu'aucun autre système capteur ne change d'état, alors le basculement en mode d'économie d'énergie n'est pas effectué. De préférence, dans le cas où, avant la fin du délai de mise en veille, tous les systèmes capteurs sont à l'état non-affecté, alors le basculement en mode d'économie d'énergie n'est pas effectué. Ce cas peut se produire par exemple si la pièce 10 est positionnée à une position le long de la course C22 où il est prévu qu'aucun système capteur ne soit à l'état affecté. Dans tous ces cas, on peut par exemple prévoir que tous les systèmes capteurs, ou certains systèmes capteurs sont remis en mode opérant, sans basculement en mode d'économie d'énergie.

Si à la fin du décompte de délai de mise en veille, aucun des systèmes capteurs n'a changé d'état, alors une condition C1 est remplie, et le gestionnaire 121 fait automatiquement basculer le détecteur 12 en mode d'économie d'énergie. Pour cela, le système capteur qui a été mémorisé, c'est-à-dire celui qui est à l'état affecté en dernier, est maintenu en mode opérant, alors que les autres systèmes capteurs sont passés en mode de veille. Autrement dit, on maintient en mode opérant seulement le système capteur face auquel le témoin 57 s'est arrêté à la fin du mouvement de la pièce 10. Cela permet une économie d'énergie entre deux phases de mouvement successives de la pièce 10, qui sont relativement longues, généralement plusieurs minutes, heures ou jours, comparativement aux phases de mouvement qui ne durent généralement que de l'ordre de quelques secondes.

Par « changement d'état » d'un système capteur multiple, on entend avantageusement le basculement entre l'état non affecté et l'état affecté d'un seul de ses capteurs. En variante, on peut prévoir que le changement d'état correspond au basculement du système capteur entre l'état non affecté et l'état affecté.

De préférence, les systèmes capteurs sont maintenus en mode de veille pendant toute la durée du mode d'économie d'énergie, hormis le système capteur mémorisé, qui est maintenu en mode opérant.

Si le système capteur maintenu en mode opérant est un système capteur multiple, notamment un système capteur multiple d'extrémité, alors on prévoit avantageusement de maintenir un seul des capteurs du système capteur multiple en mode opérant, afin d'obtenir que le système capteur multiple soit en mode opérant économe. De préférence, dans le cas où le système capteur multiple maintenu opérant est un système capteur d'extrémité, tel que le système capteur 99A, 99B, on maintient en mode opérant seulement le capteur intermédiaire 99B, alors que le capteur de fin de course 99A est basculé en mode de veille. En effet, on estime que pour sortie de la plage d'extrémité de la pièce 10 entraînera nécessairement un changement d'état du capteur intermédiaire 99B.

On peut optionnellement prévoir que, en mode d'économie d'énergie, tout autre moyen électronique 24 est mis dans un mode de veille par le gestionnaire 121, temporairement ou en permanence, notamment l'analyseur 98 et/ou l'accéléromètre 120.

Pour faire passer le détecteur 12 à nouveau en mode d'éveil, le gestionnaire 121 vérifie si une condition C2 est remplie. Cette condition C2 consiste à vérifier si le système capteur qui est maintenu en mode opérant change d'état, et en particulier change d'étant en ce qu'il renvoie l'état non affecté. Cela traduit que la pièce 10 s'est déplacée.

Alors, le gestionnaire 121 met en oeuvre une étape A3 où il fait basculer automatiquement le détecteur 12 en mode d'éveil, pour que l'analyseur 98 puisse identifier la nouvelle position de la pièce 10, en particulier pour savoir dans quelle plage la pièce 10 se situe.

De préférence, le basculement automatique en mode d'éveil consiste à basculer tous les systèmes capteurs en mode opérant, et même tous les capteurs en mode opérant. Cela évite toute erreur dans la détermination de la position de la pièce 10.

En variante, on peut optimiser encore le fonctionnement en ne faisant basculer en mode opérant que certains systèmes capteurs, ou que quelques capteurs, en fonction de la situation. Par exemple, on peut choisir de faire passer en mode opérant seulement le ou les capteurs adjacents au capteur qui a changé d'état. En fonction du résultat, on peut ensuite faire passer d'autres capteurs en mode opérant, ou considérer que l'information fournie par les seuls capteurs en mode opérant est suffisante pour déterminer la position de la pièce 10 et ne pas faire passer davantage de capteurs en mode opérant.

De préférence, le basculement en mode opérant des systèmes capteurs est fait instantanément ou très rapidement par le gestionnaire 121, à partir du moment où la condition C2 est remplie, afin que le déplacement de la pièce 10 soit encore en cours au moment où le détecteur 12 a basculé en mode d'éveil, notamment pour détecter un éventuel changement de sens de la pièce 10.

Pour réduire la consommation d'énergie du détecteur 12, on prévoit préférentiellement que le transmetteur 82 ne transmet l'information de position de la pièce 10 que lorsqu'un délai de stabilisation prédéterminé a été décompté, sans que l'un des systèmes capteurs en mode opérant n'ait changé d'état, le délai de stabilisation débutant à partir du moment où l'on a mémorisé le dernier système capteur étant passé à l'état affecté. Ce décompte peut être effectué par le compteur 123, ou par un autre compteur appartenant aux moyens électroniques 24. Le délai de stabilisation est par exemple de l'ordre de quelques secondes. Ce délai de stabilisation est prédéterminé, en ce qu'il est préenregistré dans les moyens électroniques 24, paramétré par l'utilisateur et/ou en ce qu'il est appris par les moyens électroniques 24 durant le fonctionnement du détecteur 12. Par ailleurs, la valeur du délai de stabilisation peut être fonction du système capteur affecté. On peut prévoir une durée de délai de stabilisation plus élevée pour le système capteur intermédiaire 99C que pour les systèmes capteurs d'extrémité 99A, 99B et 99D, 99E.

Pour réduire la consommation d'énergie du détecteur 12, on prévoit préférentiellement que, une fois que le transmetteur 82 a transmis une information émanant de l'accéléromètre 120, une nouvelle information émanant de l'accéléromètre 120 n'est transmise que lorsqu'un délai de stabilisation prédéterminé a été décompté. Ce décompte peut être effectué par le compteur 123, ou par un autre compteur appartenant aux moyens électroniques 24. Le délai de stabilisation est par exemple de l'ordre de quelques dizaines de secondes, par exemple une minute. Ce délai de stabilisation est prédéterminé, en ce qu'il est préenregistré dans les moyens électroniques 24, paramétré par l'utilisateur et/ou en ce qu'il est appris par les moyens électroniques 24 durant le fonctionnement du détecteur 12.

Pour réduire la consommation d'énergie du transmetteur 82, on prévoit préférentiellement que le gestionnaire 121 fait basculer l'accéléromètre 120 dans un mode de veille, lorsqu'un système capteur prédéterminé est à l'état affecté, ou à lorsque qu'un délai prédéterminé a été décompté à partir de l'occurrence de cet événement. Par exemple, on peut choisir que le gestionnaire 121 met en mode de veille l'accéléromètre 120 lorsque le système capteur correspondant à une position déverrouillée de la pièce 10, ou à une position d'ouvrant battant, est à l'état affecté. Ainsi, on n'alimente l'accéléromètre seulement dans les situations où il est utile. Par exemple, on peut aussi choisir que le gestionnaire 121 met en mode veille l'accéléromètre 120 pendant un délai prédéterminé après que l'un des systèmes capteurs a changé d'état, et bascule à nouveau l'accéléromètre 120 en mode opérant à l'issue de ce délai. Ceci permet par exemple de surveiller une éventuelle effraction lorsque l'ouvrant est fermé et immobile, et d'éviter de solliciter l'accéléromètre en mode opérant lorsque l'ouvrant est déplacé dans des conditions normales de fonctionnement.

A l'inverse, le gestionnaire 121 peut faire basculer l'accéléromètre en mode opérant lorsque ce système capteur repasse à l'état non affecté, c'est-à-dire lorsque la condition C2 est remplie, ou qu'un autre système capteur prédéterminé passe à l'état affecté.

Chaque caractéristique d'un mode de réalisation ou variante décrit dans ce qui précède peut être mise en oeuvre dans les autres modes de réalisation et variantes décrits dans ce qui précède, pour autant que techniquement admissible.

## Revendications

1. Procédé de gestion d'énergie, pour un détecteur (12) de position d'une pièce de ferrure (10) mobile portée par un chant (5; 6) appartenant à un ouvrant (3) ou à un dormant (4) d'une huisserie (1), telle qu'une porte, une fenêtre ou un volet, la pièce de ferrure (10) étant mobile suivant une course (C22) comprenant plusieurs plages (C221, C222, C223) distinctes de positions de la pièce de ferrure (10) par rapport au chant (5; 6), le détecteur (12) comprenant :
• une batterie (30, 32) ;
• des systèmes capteurs (99A, 99B; 99C; 99D, 99E), qui sont alimentés en énergie par la batterie (30, 32), chaque système capteur (99A, 99B; 99C; 99D, 99E) étant respectivement associé à l'une des plages (C221, C222, C223) et étant configuré pour adopter un mode opérant, dans lequel ledit système capteur (99A, 99B; 99C; 99D, 99E) renvoie au moins :
◆ un état affecté, si la pièce de ferrure (10) est positionnée dans la plage (C221, C222, C223) associée audit système capteur (99A, 99B; 99C; 99D, 99E), et
◆ un état non affecté, si la pièce de ferrure (10) est positionnée hors de la plage (C221, C222, C223) associée audit système capteur (99A, 99B; 99C; 99D, 99E) ;
• un analyseur électronique (98), qui est configuré pour déterminer une information de position de la pièce de ferrure (10) le long de la course (C22), sur la base de l'état respectif renvoyé par les systèmes capteurs (99A, 99B; 99C; 99D, 99E) ; et
• un transmetteur électronique (82), pour transmettre l'information de position déterminée par l'analyseur électronique (98) ;
**caractérisé en ce que** le procédé comprend :
• (A1) une mémorisation de quel système capteur (99A, 99B; 99C; 99D, 99E) est en dernier à l'état affecté alors que le détecteur (12) est dans un mode d'éveil ;
• (A2) alors que le détecteur (12) est en mode d'éveil, un basculement automatique du détecteur (12) dans un mode d'économie d'énergie incluant :
◆ un maintien en mode opérant du système capteur (99A, 99B; 99C; 99D, 99E) qui a été mémorisé, et
◆ un basculement dans un mode de veille de tout autre système capteur (99A, 99B; 99C; 99D, 99E) qui était en mode opérant ; et
• (A3) un basculement automatique du détecteur (12) en mode d'éveil, (C2) lorsque le système capteur (99A, 99B; 99C; 99D, 99E) qui a été mémorisé change d'état alors que le détecteur (12) est en mode d'économie d'énergie, le basculement automatique en mode d'éveil incluant un basculement en mode opérant d'au moins l'un des systèmes capteurs (99A, 99B; 99C; 99D, 99E) qui était en mode de veille.

2. Procédé selon la revendication 1, dans lequel le basculement automatique du détecteur (12) en mode d'économie d'énergie est effectué seulement lorsqu'un délai de mise en veille prédéterminé a été décompté durant le mode d'éveil, sans que l'un des systèmes capteurs (99A, 99B; 99C; 99D, 99E) en mode opérant n'ait changé d'état durant le délai de mise en veille, le délai de mise en veille étant débuté à partir du moment où le système capteur (99A, 99B; 99C; 99D, 99E) mémorisé est passé en dernier à l'état affecté.

3. Procédé selon l'une quelconque des revendications précédentes, dans lequel, pour le basculement automatique en mode d'éveil, tous les systèmes capteurs (99A, 99B; 99C; 99D, 99E) qui étaient en mode de veille sont basculés en mode opérant.

4. Procédé selon l'une quelconque des revendications précédentes, dans lequel :
• au moins l'un des systèmes capteurs (99A, 99B; 99C; 99D, 99E) est un système capteur simple (99C) et est constitué par un unique capteur ;
• le mode de veille du système capteur simple (99C) correspond à une absence d'alimentation de son unique capteur en énergie ; et
• le mode opérant du système capteur simple (99C) correspond à une alimentation de son unique capteur en énergie.

5. Procédé selon l'une quelconque des revendications précédentes, dans lequel :
• au moins l'un des systèmes capteurs (99A, 99B; 99C; 99D, 99E) est un système capteur multiple (99A, 99B ; 99D, 99E) et est constitué par plusieurs capteurs ;
• le mode de veille du système capteur multiple (99A, 99B ; 99D, 99E) correspond à une absence d'alimentation de tous les capteurs du système capteur multiple ; et
• le mode opérant du système capteur multiple (99A, 99B ; 99D, 99E) correspond à une alimentation d'au moins l'un des capteurs du système capteur multiple (99A, 99B ; 99D, 99E).

6. Procédé selon la revendication 5, dans lequel si le système capteur multiple (99A, 99B ; 99D, 99E) a été mémorisé comme étant en dernier à l'état affecté alors que le détecteur (12) a basculé dans le mode d'économie d'énergie, le système capteur multiple (99A, 99B ; 99D, 99E) est maintenu en mode opérant en ce que seulement l'un des capteurs du système capteur multiple (99A, 99B ; 99D, 99E) reste alimenté.

7. Procédé selon la revendication 6, dans lequel :
• la plage associée au système capteur multiple (99A, 99B ; 99D, 99E) est une plage d'extrémité (C221, C223), qui s'étend à une extrémité de la course (C22) en translation ;
• l'un des capteurs du système capteur multiple (99A, 99B ; 99D, 99E) est un capteur de fin de course (99A ; 99E) ;
• l'un des capteurs du système capteur multiple (99A, 99B ; 99D, 99E) est un capteur intermédiaire (99B ; 99D) ; et
• si le système capteur multiple (99A, 99B ; 99D, 99E) a été mémorisé comme étant en dernier à l'état affecté alors que le détecteur (12) a basculé dans le mode d'économie d'énergie, le système capteur multiple (99A, 99B ; 99D, 99E) est maintenu en mode opérant en ce que le capteur de fin de course (99A ; 99E) cesse d'être alimenté et en ce que le capteur intermédiaire (99B ; 99D) reste alimenté.

8. Procédé selon l'une quelconque des revendications précédentes, dans lequel le procédé comprend :
• une détermination de l'information de position par l'analyseur électronique (98) sur la base de l'état respectif renvoyé par les systèmes capteurs (99A, 99B; 99C; 99D, 99E) ; et
• une transmission de l'information de position par le transmetteur électronique (82), la transmission étant effectuée seulement lorsqu'un délai de stabilisation prédéterminé a été décompté sans que l'un des systèmes capteurs (99A, 99B; 99C; 99D, 99E) en mode opérant n'ait changé d'état, le délai de stabilisation débutant à partir du moment où le système capteur (99A, 99B; 99C; 99D, 99E) mémorisé est passé en dernier à l'état affecté.

9. Procédé selon l'une quelconque des revendications précédentes, dans lequel :
• le détecteur (12) comprend un accéléromètre (120), distinct des systèmes capteurs (99A, 99B; 99C; 99D, 99E), qui est alimenté en énergie par la batterie (30, 32) et qui évolue entre un mode de veille et un mode opérant ; et
• le procédé comprend un basculement dans un mode de veille de l'accéléromètre (120) lorsqu'un système capteur (99A, 99B; 99C; 99D, 99E) prédéterminé parmi les systèmes capteurs (99A, 99B; 99C; 99D, 99E), est à l'état affecté.

10. Procédé selon l'une quelconque des revendications précédentes, dans lequel le basculement automatique du détecteur (12) dans le mode d'économie d'énergie est effectué seulement si le système capteur (99A, 99B ; 99C ; 99D, 99E) qui est en dernier à l'état affecté est encore à l'état affecté.

11. Procédé selon l'une quelconque des revendications précédentes, dans lequel le détecteur (12) comprend :
• un boîtier (20), par l'intermédiaire duquel le détecteur (12) est fixé sur le chant (5; 6), le boîtier (20) renfermant la batterie (30, 32), les systèmes capteurs (99A, 99B; 99C; 99D, 99E), l'analyseur électronique (98) et le transmetteur électronique (82) ; et
• une tige (22), qui est mobile en translation par rapport au boîtier et qui comprend :
◆ une extrémité palpeuse (51), disposée à l'extérieur du boîtier et par l'intermédiaire de laquelle la tige (22) est actionnée en translation par la pièce de ferrure (10), pour que la position de la tige (22) reflète la position de la pièce de ferrure (10) suivant la course (C22) ; et
◆ un témoin (57), disposé à l'intérieur du boîtier, chaque système capteur (99A, 99B; 99C; 99D, 99E) en mode opérant renvoyant :
◊ l'état affecté lorsque le témoin (57) est à proximité dudit système capteur (99A, 99B; 99C; 99D, 99E) et
◊ l'état non affecté lorsque le témoin (57) est éloigné dudit système capteur (99A, 99B; 99C; 99D, 99E).

12. Détecteur (12) de position d'une pièce de ferrure (10) mobile portée par un chant (5; 6) appartenant à un ouvrant (3) ou à un dormant (4) d'une huisserie (1), telle qu'une porte, une fenêtre ou un volet, la pièce de ferrure (10) étant mobile suivant une course (C22) comprenant plusieurs plages (C221, C222, C223) distinctes de positions de la pièce de ferrure (10) par rapport au chant (5; 6), le détecteur (12) comprenant :
• une batterie (30, 32) ;
• des systèmes capteurs (99A, 99B; 99C; 99D, 99E), qui sont alimentés en énergie par la batterie (30, 32), chaque système capteur (99A, 99B; 99C; 99D, 99E) étant respectivement associé à l'une des plages (C221, C222, C223) et étant configuré pour adopter un mode opérant, dans lequel ledit système capteur (99A, 99B; 99C; 99D, 99E) renvoie au moins :
◆ un état affecté, si la pièce de ferrure (10) est positionnée dans la plage (C221, C222, C223) associée audit système capteur (99A, 99B; 99C; 99D, 99E), et
◆ non affecté, si la pièce de ferrure (10) est positionnée hors de la plage (C221, C222, C223) associée audit système capteur (99A, 99B; 99C; 99D, 99E) ;
• un analyseur électronique (98), qui est configuré pour déterminer une information de position de la pièce de ferrure (10) le long de la course (C22), sur la base de l'état respectif renvoyé par les systèmes capteurs (99A, 99B; 99C; 99D, 99E) ; et
• un transmetteur électronique (82), pour transmettre l'information de position déterminée par l'analyseur électronique (98) ;
**caractérisé en ce que** :
• le détecteur (12) comprend un gestionnaire d'alimentation électronique (121) et une mémoire électronique (122) ;
• la mémoire électronique (122) est configurée pour mémoriser quel système capteur (99A, 99B; 99C; 99D, 99E) est en dernier à l'état affecté alors que le détecteur (12) est dans un mode d'éveil ;
• alors que le détecteur (12) est dans le mode d'éveil, le gestionnaire d'alimentation électronique (121) est configuré pour basculer automatiquement le détecteur (12) dans un mode d'économie d'énergie, en :
◆ maintenant en mode opérant le système capteur (99A, 99B; 99C; 99D, 99E) qui a été mémorisé, et
◆ basculant dans un mode de veille tout autre système capteur (99A, 99B; 99C; 99D, 99E) qui était en mode opérant ; et
• le gestionnaire d'alimentation électronique (121) est configuré pour basculer automatiquement le détecteur (12) en mode d'éveil lorsque le système capteur (99A, 99B; 99C; 99D, 99E) qui a été mémorisé change d'état alors que le détecteur (12) est en mode d'économie d'énergie, en basculant en mode opérant au moins l'un des systèmes capteurs (99A, 99B; 99C; 99D, 99E) qui était en mode de veille.

## Patentansprüche

1. Energieverwaltungsverfahren für einen Positionsdetektor (12) eines beweglichen Beschlagteils (10), das von einer Kante (5; 6) getragen wird, die zu einem Flügel (3) oder einer Zarge (4) eines Rahmens (1), wie einer Tür, einem Fenster oder einem Fensterladen gehört, wobei das Beschlagteil (10) entlang eines Wegs (C22) beweglich ist, umfassend mehrere unterschiedliche Bereiche (C221 , C222, C223) von Positionen des Beschlagteils (10) in Bezug auf die Kante (5; 6), der Detektor (12) umfassend:
• eine Batterie (30, 32);
• Sensorsysteme (99A, 99B; 99C; 99D, 99E), die von der Batterie (30, 32) mit Energie versorgt werden, wobei jedes Sensorsystem (99A, 99B; 99C; 99D, 99E) jeweils mit einem der Bereiche (C221 , C222, C223) assoziiert und konfiguriert ist, um einen Betriebsmodus anzunehmen, in dem das Sensorsystem (99A, 99B; 99C; 99D, 99E) mindestens eines zurückgibt:
◆ einen zugewiesenen Zustand, wenn das Beschlagteil (10) innerhalb des Bereichs (C221, C222, C223) positioniert ist, der mit dem Sensorsystem (99A, 99B; 99C; 99D, 99E) assoziiert ist, und
◆ einen nicht zugewiesenen Zustand, wenn das Beschlagteil (10) außerhalb des Bereichs (C221, C222, C223) positioniert ist, der mit dem Sensorsystem (99A, 99B; 99C; 99D, 99E) assoziiert ist;
• einen elektronischen Analysator (98), der konfiguriert ist, um eine Positionsinformation des Beschlagteils (10) entlang des Wegs (C22) basierend auf dem jeweiligen Zustand zu bestimmen, der von den Sensorsystemen (99A, 99B; 99C; 99D, 99E) zurückgegeben wird; und
• einen elektronischen Sender (82), um die von dem elektronischen Analysator (98) bestimmten Positionsinformationen zu übertragen;
**dadurch gekennzeichnet, dass** das Verfahren Folgendes umfasst:
• (A1) Speichern, welches Sensorsystem (99A, 99B; 99C; 99D, 99E) zuletzt in dem zugewiesenen Zustand ist, während der Detektor (12) in einem Bereitschaftsmodus ist;
• (A2), während sich der Detektor (12) in dem Bereitschaftsmodus ist, ein automatisches Umschalten des Detektors (12) in einen Energiesparmodus der Folgendes beinhaltet:
◆ ein Halten des Sensorsystems (99A, 99B; 99C; 99D, 99E), das gespeichert wurde, in dem Betriebsmodus, und
◆ ein Umschalten von jedem anderen Sensorsystem (99A, 99B; 99C; 99D, 99E), das in dem Betriebsmodus war, in einen Bereitschaftsmodus; und
• (A3) ein automatisches Umschalten des Detektors (12) in den Bereitschaftsmodus, (C2) wenn das Sensorsystem (99A, 99B; 99C; 99D, 99E), das gespeichert wurde, seinen Zustand ändert, während der Detektor (12) in dem Energiesparmodus ist, wobei das automatische Umschalten in den Bereitschaftsmodus ein Umschalten von mindestens einem der Sensorsysteme (99A, 99B; 99C; 99D, 99E), das in dem Bereitschaftsmodus war, in den Betriebsmodus beinhaltet.

2. Verfahren nach Anspruch 1, wobei das automatische Umschalten des Detektors (12) in den Energiesparmodus nur dann erfolgt, wenn eine bestimmte Zeit bis zu dem Bereitschaftsmodus während des Aufweckmodus heruntergezählt wurde, ohne dass eines der Sensorsysteme (99A, 99B; 99C; 99D, 99E) in dem Betriebsmodus während der Zeit bis zu dem Bereitschaftsmodus seinen Zustand geändert hat, wobei die Zeit bis zu dem Bereitschaftsmodus begonnen wird ab dem Zeitpunkt, an dem das gespeicherte Sensorsystem (99A, 99B; 99C; 99D, 99E) zuletzt in den zugewiesenen Zustand gewechselt hat.

3. Verfahren nach einem der vorherigen Ansprüche, wobei für das automatische Umschalten in den Aufweckmodus alle Sensorsysteme (99A, 99B; 99C; 99D, 99E), die in dem Bereitschaftsmodus waren, in den Betriebsmodus umgeschaltet werden.

4. Verfahren nach einem der vorherigen Ansprüche, wobei:
• mindestens eines der Sensorsysteme (99A, 99B; 99C; 99D, 99E) ein einzelnen Sensorsystem (99C) ist und aus einem einzelnen Sensor besteht;
• der Bereitschaftsmodus des einzelnen Sensorsystems (99C) einer Nichtversorgung seines einzelnen Sensors mit Energie entspricht; und
• der Betriebsmodus des einzelnen Sensorsystems (99C) einer Energieversorgung seines einzelnen Sensors entspricht.

5. Verfahren nach einem der vorherigen Ansprüche, wobei:
• mindestens eines der Sensorsysteme (99A, 99B; 99C; 99D, 99E) ein Mehrfachsensorsystem (99A, 99B; 99D, 99E) ist und aus mehreren Sensoren besteht;
• der Bereitschaftsmodus des Mehrfachsensorsystems (99A, 99B; 99D, 99E) einer Nicht-Stromversorgung aller Sensoren des Mehrfachsensorsystems entspricht; und
• der Betriebsmodus des Mehrfachsensorsystems (99A, 99B; 99D, 99E) einer Stromversorgung von mindestens einem der Sensoren des Mehrfachsensorsystems (99A, 99B; 99D, 99E) entspricht.

6. Verfahren nach Anspruch 5, wobei, wenn das Mehrfachsensorsystem (99A, 99B; 99D, 99E) als zuletzt in dem zugewiesenen Zustand gespeichert wurde, während der Detektor (12) in den Energiesparmodus umgeschaltet hat, das Mehrfachsensorsystem (99A, 99B; 99D, 99E) in dem Betriebsmodus gehalten wird, indem nur einer der Sensoren des Mehrfachsensorsystems (99A, 99B; 99D, 99E) mit Strom versorgt bleibt.

7. Verfahren nach Anspruch 6, wobei:
• der Bereich, der mit dem Mehrfachsensorsystem (99A, 99B; 99D, 99E) assoziiert ist, ein Endbereich (C221 , C223) ist, der sich an einem Ende des Translationshubs (C22) erstreckt;
• einer der Sensoren des Mehrfachsensorsystems (99A, 99B; 99D, 99E) ein Endlagensensor (99A; 99E) ist;
• einer der Sensoren des Mehrfachsensorsystems (99A, 99B; 99D, 99E) ein Zwischensensor (99B; 99D) ist; und
• wenn das Mehrfachsensorsystem (99A, 99B; 99D, 99E) als zuletzt in dem zugewiesenen Zustand gespeichert wurde, während der Detektor (12) in den Energiesparmodus umgeschaltet hat, das Mehrfachsensorsystem (99A, 99B; 99D, 99E) in dem Betriebsmodus gehalten wird, indem der Endlagensensor (99A; 99E) aufhört, mit Strom versorgt zu werden, und der Zwischensensor (99B; 99D) mit Strom versorgt bleibt.

8. Verfahren nach einem der vorherigen Ansprüche, wobei das Verfahren Folgendes umfasst:
• ein Bestimmen der Positionsinformation durch den elektronischen Analysator (98) basierend auf dem jeweiligen Zustand, der von den Sensorsystemen (99A, 99B; 99C; 99D, 99E) zurückgegeben wird; und
• ein Übertragen der Positionsinformationen durch den elektronischen Sender (82), wobei das Übertragen nur durchgeführt wird, wenn eine vorbestimmte Stabilisierungszeit abgelaufen ist, ohne dass eines der Sensorsysteme (99A, 99B; 99C; 99D, 99E) in dem Betriebsmodus seinen Zustand geändert hat, wobei die Stabilisierungszeit von dem Zeitpunkt an beginnt, wenn das gespeicherte Sensorsystem (99A, 99B; 99C; 99D, 99E) zuletzt in den zugewiesenen Zustand gewechselt hat.

9. Verfahren nach einem der vorherigen Ansprüche, wobei:
• der Detektor (12) einen Beschleunigungsmesser (120) umfasst, der von den Sensorsystemen (99A, 99B; 99C; 99D, 99E) verschieden ist, der von der Batterie (30, 32) mit Energie versorgt wird und sich zwischen einem Bereitschaftsmodus und einem Betriebsmodus bewegt; und
• das Verfahren ein Umschalten des Beschleunigungsmessers (120) in einen Bereitschaftsmodus umfasst, wenn ein Sensorsystem (99A, 99B; 99C; 99D, 99E), das aus den Sensorsystemen (99A, 99B; 99C; 99D, 99E) vorbestimmt ist, in dem zugewiesenen Zustand ist.

10. Verfahren nach einem der vorherigen Ansprüche, wobei das automatische Umschalten des Sensors (12) in den Energiesparmodus nur dann durchgeführt wird, wenn das Sensorsystem (99A, 99B; 99C; 99D, 99E), das zuletzt in dem zugewiesenen Zustand war, noch in dem zugewiesenen Zustand ist.

11. Verfahren nach einem der vorherigen Ansprüche, wobei der Detektor (12) Folgendes umfasst:
• ein Gehäuse (20), durch das der Detektor (12) an der Kante (5; 6) befestigt wird, wobei das Gehäuse (20) die Batterie (30, 32), die Sensorsysteme (99A, 99B; 99C; 99D, 99E), den elektronischen Analysator (98) und den elektronischen Sender (82) umschließt; und
• einen Stab (22), der in Bezug auf das Gehäuse translatorisch beweglich ist, und der Folgendes umfasst:
◆ ein Fühlerende (51), das außerhalb des Gehäuses angeordnet ist und über das der Stab (22) durch das Beschlagteil (10) translatorisch betätigt wird, damit die Position des Stabs (22) die Position des Beschlagteils (10) entlang des Hubs (C22) widerspiegelt; und
◆ einen Zeiger (57), der im Inneren des Gehäuses angeordnet ist, wobei jedes Sensorsystem (99A, 99B; 99C; 99D, 99E) in dem Betriebsmodus Folgendes zurückgibt:
◊ den zugewiesenen Zustand, wenn der Zeiger (57) in der Nähe des Sensorsystems (99A, 99B; 99C; 99D, 99E) ist, und
◊ den nicht zugewiesenen Zustand, wenn der Zeiger (57) von dem Sensorsystem (99A, 99B; 99C; 99D, 99E) entfernt ist.

12. Positionsdetektor (12) eines beweglichen Beschlagteils (10), das von einer Kante (5; 6) getragen wird, die zu einem Flügel (3) oder einer Zarge (4) eines Rahmens (1), wie einer Tür, einem Fenster oder einem Fensterladen gehört, wobei das Beschlagteil (10) entlang eines Wegs (C22) beweglich ist, umfassend mehrere unterschiedliche Bereiche (C221, C222, C223) von Positionen des Beschlagteils (10) in Bezug auf die Kante (5; 6), der Detektor (12) umfassend:
• eine Batterie (30, 32);
• Sensorsysteme (99A, 99B; 99C; 99D, 99E), die von der Batterie (30, 32) mit Energie versorgt werden, wobei jedes Sensorsystem (99A, 99B; 99C; 99D, 99E) jeweils mit einem der Bereiche (C221, C222, C223) assoziiert und konfiguriert ist, um einen Betriebsmodus anzunehmen, in dem das Sensorsystem (99A, 99B; 99C; 99D, 99E) mindestens eines zurückgibt:
◆ einen zugewiesenen Zustand, wenn das Beschlagteil (10) innerhalb des Bereichs (C221, C222, C223) positioniert ist, der mit dem Sensorsystem (99A, 99B; 99C; 99D, 99E) assoziiert ist, und
◆ nicht zugewiesen, wenn das Beschlagteil (10) außerhalb des Bereichs (C221, C222, C223) positioniert ist, der mit dem Sensorsystem (99A, 99B; 99C; 99D, 99E) assoziiert ist;
• einen elektronischen Analysator (98), der konfiguriert ist, um eine Positionsinformation des Beschlagteils (10) entlang des Wegs (C22) basierend auf dem jeweiligen Zustand zu bestimmen, der von den Sensorsystemen (99A, 99B; 99C; 99D, 99E) zurückgegeben wird; und
• einen elektronischen Sender (82), um die von dem elektronischen Analysator (98) bestimmten Positionsinformationen zu übertragen;
**dadurch gekennzeichnet, dass**:
• der Detektor (12) einen elektronischen Energiemanager (121) und einen elektronischen Speicher (122) umfasst;
• der elektronische Speicher (122) konfiguriert ist, um zu speichern, welches Sensorsystem (99A, 99B; 99C; 99D, 99E) zuletzt in dem zugewiesenen Zustand ist, während der Detektor (12) in einem Bereitschaftsmodus ist;
• während der Detektor (12) in dem Aufweckmodus ist, der elektronische Energiemanager (121) konfiguriert ist, um den Detektor (12) automatisch in einen Energiesparmodus umzuschalten, durch:
◆ Halten des Sensorsystems (99A, 99B; 99C; 99D, 99E), das gespeichert wurde, in dem Betriebsmodus, und
◆ Umschalten von jedem anderen Sensorsystem (99A, 99B; 99C; 99D, 99E), das in dem Betriebsmodus war, in einen Bereitschaftsmodus; und
• der elektronische Energiemanager (121) konfiguriert ist, um den Detektor (12) automatisch in den Aufweckmodus umzuschalten, wenn das Sensorsystem (99A, 99B; 99C; 99D, 99E), das gespeichert wurde, den Zustand ändert, während der Detektor (12) in dem Energiesparmodus ist, indem mindestens eines der Sensorsysteme (99A, 99B; 99C; 99D, 99E), das in dem Bereitschaftsmodus war, in den Betriebsmodus umgeschaltet wird.

## Claims

1. Power management method for a detector (12) of the position of a mobile fitting part (10) carried by an edge (5; 6) belonging to a sash (3) or a frame (4) of a framework (1), such as a door, a window or a shutter, the fitting part (10) being mobile along a path (C22) comprising several distinct ranges (C221, C222, C223) of positions of the fitting part (10) relative to the edge (5; 6), the detector (12) comprising:
• a battery (30, 32);
• sensor systems (99A, 99B; 99C; 99D, 99E), which are powered by the battery (30, 32), each sensor system (99A, 99B; 99C; 99D, 99E) being respectively associated with one of the ranges (C221, C222, C223) and being configured to adopt an operating mode, wherein said sensor system (99A, 99B; 99C; 99D, 99E) returns at least:
◆ an affected state, if the fitting part (10) is positioned in the range (C221, C222, C223) associated with said sensor system (99A, 99B; 99C; 99D, 99E), and
◆ an unaffected state, if the fitting part (10) is positioned outside the range (C221 , C222, C223) associated with said sensor system (99A, 99B; 99C; 99D, 99E);
• an electronic analyser (98), which is configured to determine position information of the fitting part (10) along the path (C22), based on the respective status returned by the sensor systems (99A, 99B; 99C; 99D, 99E); and
• an electronic transmitter (82), for transmitting the position information determined by the electronic analyser (98);
**characterised in that** the method comprises:
• (A1) memorizing which sensor system (99A, 99B; 99C; 99D, 99E) is last in the affected state while the detector (12) is in a wake-up mode;
• (A2) while the detector (12) is in wake-up mode, automatically switching the detector (12) into a power-saving mode including:
◆ retaining in operating condition the sensor system (99A, 99B; 99C; 99D, 99E) that was memorized, and
◆ switching every other sensor system (99A, 99B; 99C; 99D, 99E) that was in the operating mode to a stand-by mode; and
• (A3) automatically switching the detector (12) to wake-up mode, (C2) when the sensor system (99A, 99B; 99C; 99D, 99E) that was memorized changes state while the detector (12) is in power-saving mode, the automatic switch to wake-up mode including a switchover of at least one of the sensor systems (99A, 99B; 99C; 99D, 99E) that was in the stand-by mode to the operating mode.

2. The method according to claim 1, wherein the automatic switchover of the detector (12) to the power saving mode is performed only when a predetermined stand-by time has been counted down during the wake-up mode, without any of the sensor systems (99A, 99B; 99C; 99D, 99E) in operating mode having changed state during the stand-by time, the stand-by time having started from the time when the memorized sensor system (99A, 99B; 99C; 99D, 99E) last changed to the affected state.

3. The method according to one of the preceding claims, wherein, for the automatic switchover to the wake-up mode all sensor systems (99A, 99B; 99C; 99D, 99E) which were in stand-by mode are switched to operating mode.

4. The method according to one of the preceding claims, wherein:
• at least one of the sensor systems (99A, 99B; 99C; 99D, 99E) is a single-sensor system (99C) and consists of a single sensor;
• the stand-by mode of the single sensor system (99C) corresponds to no power being supplied to its single sensor; and
• the operating mode of the single sensor system (99C) corresponds to power being supplied to its single sensor.

5. The method according to one of the preceding claims, wherein:
• at least one of the sensor systems (99A, 99B; 99C; 99D, 99E) is a multi-sensor system (99A, 99B; 99D, 99E) and consists of a plurality of sensors;
• the stand-by mode of the multi-sensor system (99A, 99B; 99D, 99E) corresponds to no power being supplied to any of the sensors of the multi-sensor system; and
• the operating mode of the multi-sensor system (99A, 99B; 99D, 99E) corresponds to power being supplied to at least one of the sensors of the multi-sensor system (99A, 99B; 99D, 99E).

6. The method according to claim 5, wherein if the multi-sensor system (99A, 99B; 99D, 99E) has been memorized as last in the affected state while the detector (12) has switched to the power saving mode, the multi-sensor system (99A, 99B; 99D, 99E) is kept in the operating mode in that only one of the sensors of the multi-sensor system (99A, 99B; 99D, 99E) remains powered.

7. The method according to claim 6, wherein:
• the range associated with the multi-sensor system (99A, 99B; 99D, 99E) is an end range (C221, C223), which extends to one end of the translational path (C22);
• one of the sensors in the multi-sensor system (99A, 99B; 99D, 99E) is an end limit sensor (99A; 99E);
• one of the sensors of the multi-sensor system (99A, 99B; 99D, 99E) is an intermediate sensor (99B; 99D); and
• if the multi-sensor system (99A, 99B; 99D, 99E) has been memorized as last in the affected state while the detector (12) has switched to the power-saving mode, the multi-sensor system (99A, 99B; 99D, 99E) is kept in the operating mode in that the end limit sensor (99A; 99E) ceases to be powered and in that the intermediate sensor (99B; 99D) remains powered.

8. The method according to one of the preceding claims, wherein the method comprises:
• determining the position information, by the electronic analyser (98), on the basis of the respective status returned by the sensor systems (99A, 99B; 99C; 99D, 99E); and
• transmitting the position information, by the electronic transmitter (82), the transmission being carried out only when a predetermined stabilisation time has elapsed without one of the sensor systems (99A, 99B; 99C; 99D, 99E) in operating mode changing its state, the stabilisation time starting from the moment when the memorized sensor system (99A, 99B; 99C; 99D, 99E) last changed to the affected state.

9. The method according to one of the preceding claims, wherein:
• the detector (12) comprises an accelerometer (120), separate from the sensor systems (99A, 99B; 99C; 99D, 99E), which is powered by the battery (30, 32) and which moves between a stand-by mode and an operating mode; and
• the method comprises switching to a stand-by mode of the accelerometer (120) when a predetermined sensor (99A, 99B; 99C; 99D, 99E) from among the sensor systems (99A, 99B; 99C; 99D, 99E) is in the affected state.

10. The method according to one of the preceding claims, wherein the automatic switching of the detector (12) into the power-saving mode is performed only if the sensor system (99A, 99B; 99C; 99D, 99E) which is last in the affected state is still in the affected state.

11. The method according to one of the preceding claims, wherein the detector (12) comprises:
• a housing (20), through which the detector (12) is attached to the edge (5; 6), the housing (20) enclosing the battery (30, 32), the sensor systems (99A, 99B; 99C; 99D, 99E), the electronic analyser (98) and the electronic transmitter (82); and
• a rod (22), which is movable in translation with respect to the housing and which comprises:
◆ a sensing end (51), arranged outside the housing and via which the rod (22) is actuated in translation by the fitting part (10), so that the position of the rod (22) reflects the position of the fitting part (10) along the path (C22); and
◆ a control item (57), arranged within the housing, each sensor system (99A, 99B; 99C; 99D, 99E) in operating mode returning:
◊ the affected state when the control item (57) is in the vicinity of said sensor system (99A, 99B; 99C; 99D, 99E) and
◊ the unaffected state when the control item (57) is away from said sensor system (99A, 99B; 99C; 99D, 99E).

12. A detector (12) of the position of a mobile fitting part (10) carried by an edge (5; 6) belonging to a sash (3) or a frame (4) of a framework (1), such as a door, a window or a shutter, the fitting part (10) being mobile along a path (C22) comprising several distinct ranges (C221, C222, C223) of positions of the fitting part (10) relative to the edge (5; 6), the detector (12) comprising:
• a battery (30, 32);
• sensor systems (99A, 99B; 99C; 99D, 99E), which are powered by the battery (30, 32), each sensor system (99A, 99B; 99C; 99D, 99E) being respectively associated with one of the ranges (C221, C222, C223) and being configured to adopt an operating mode, wherein said sensor system (99A, 99B; 99C; 99D, 99E) returns at least:
◆ an affected state, if the fitting part (10) is positioned in the range (C221, C222, C223) associated with said sensor system (99A, 99B; 99C; 99D, 99E), and
◆ an unaffected state, if the fitting part (10) is positioned outside the range (C221, C222, C223) associated with said sensor system (99A, 99B; 99C; 99D, 99E);
• an electronic analyser (98), which is configured to determine position information of the fitting part (10) along the path (C22), based on the respective status returned by the sensor systems (99A, 99B; 99C; 99D, 99E); and
• an electronic transmitter (82), for transmitting the position information determined by the electronic analyser (98);
**characterised in that**:
• the detector (12) comprises an electronic power manager (121) and an electronic memory (122);
• the electronic memory (122) is configured to memorize which sensor system (99A, 99B; 99C; 99D, 99E) is last in the affected state while the detector (12) is in a wake-up mode;
• while the detector (12) is in the wake-up mode, the electronic power manager (121) is configured to automatically switch the detector (12) into a power saving mode, by:
◆ retaining in operating condition the sensor system (99A, 99B; 99C; 99D, 99E) that was memorized, and
◆ switching every other sensor system (99A, 99B; 99C; 99D, 99E) that was in the operating mode to a stand-by mode; and
• the electronic power manager (121) is configured to automatically switch the detector (12) to a wake-up mode when the sensor system (99A, 99B; 99C; 99D, 99E) that was memorized changes state while the detector (12) is in the power-saving mode, by switching at least one of the sensor systems (99A, 99B; 99C; 99D, 99E) that was in the stand-by mode to the operating mode.
